(19) Europäisches Patentamt
European Patent Office
Office européen des brevets

(11) **EP 4 266 306 B1**

(12) **EUROPEAN PATENT SPECIFICATION**

(45) Date of publication and mention
of the grant of the patent:
**26.11.2025 Bulletin 2025/48**

(21) Application number: **22201970.5**

(22) Date of filing: **17.10.2022**

(51) International Patent Classification (IPC):
**G10L 13/033** (2013.01)    **G06F 40/40** (2020.01)
**G06N 3/0442** (2023.01)    **G06N 3/0455** (2023.01)
**G06N 3/0464** (2023.01)    **G06N 3/047** (2023.01)
**G06N 3/088** (2023.01)    G10L 15/26 (2006.01)
G10L 21/003 (2013.01)    G10L 25/30 (2013.01)
G06N 3/02 (2006.01)    G10L 21/013 (2013.01)
G06N 3/048 (2023.01)    G06N 3/084 (2023.01)

(52) Cooperative Patent Classification (CPC):
**G10L 13/033; G06F 40/40; G06N 3/0442;**
**G06N 3/0455; G06N 3/0464; G06N 3/047;**
**G06N 3/088;** G06N 3/048; G06N 3/084;
G10L 15/26; G10L 21/003; G10L 25/30;
G10L 2021/0135

(54) **PROCESSING A SPEECH SIGNAL**

VERARBEITUNG EINES SPRACHSIGNALS

TRAITEMENT D'UN SIGNAL DE PAROLE

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**

(30) Priority: **22.04.2022 EP 22169593**

(43) Date of publication of application:
**25.10.2023 Bulletin 2023/43**

(73) Proprietor: **SDL Limited**
**Maidenhead, Berkshire SL6 4UB (GB)**

(72) Inventors:
• **HU, Vivian Jin**
**London, N1 6DZ (GB)**
• **MOHAN, Devang Savita Ram**
**London, N1 6DZ (GB)**
• **HUEY, Teh Tian**
**London, N1 6DZ (GB)**
• **WALLIS, Christopher George Roy**
**London, N1 6DZ (GB)**
• **BYRNE, David James**
**London, N1 6DZ (GB)**

(74) Representative: **Marks & Clerk LLP**
**15 Fetter Lane**
**London EC4A 1BW (GB)**

(56) References cited:
WO-A1-2019/165748    US-A1- 2020 082 806

**Description**

FIELD

The present invention relates to spoken language translation.

BACKGROUND

Spoken language translation systems have various applications, for example voice-over translation for video or audio recordings. Spoken language translation systems may use speech recognition, text-to-text translation and text-to-speech processing steps for example. There is a continuing need to improve such spoken language translation systems.

US2020/082806 A1 describes a multilingual text-to-speech synthesis method and system. The method includes receiving first learning data including a learning text of a first language and learning speech data of the first language corresponding to the learning text of the first language.

SUMMARY

The invention is defined by the appended independent claims, with the dependent claims providing further preferred embodiments of the invention.

According to a first aspect, there is provided a computer implemented speech processing method for generating translated speech, comprising:

receiving a first speech signal corresponding to speech spoken in a second language;
generating first text data from the first speech signal, the first text data corresponding to text in the second language;
generating second text data from the first text data, the second text data corresponding to text in a first language;
responsive to obtaining a second speech signal corresponding to the second text spoken in the first language and in a second voice:

extracting first acoustic data from the second speech signal;
modifying the first acoustic data based on one or more acoustic data characteristics corresponding to a first voice; and
generating an output speech signal using a text to speech synthesis model taking the second text data as input and using the modified first acoustic data, the output speech signal corresponding to the second text spoken in the first language.

In one example, the text to speech synthesis model has been trained using speech signals spoken in the first language and in the first voice.

In one example, the text to speech synthesis model comprises:

an acoustic model, comprising:

a first part, configured to generate a first sequence of representations corresponding to phonetic units from the second text data, wherein the modified first acoustic data comprises an acoustic feature vector corresponding to each phonetic unit, and wherein each representation in the first sequence is combined with the corresponding acoustic feature vector to form a sequence of enhanced representations; and
a second part, configured to generate a sequence of spectrogram frames from the sequence of enhanced representations; and

a vocoder, configured to generate the output speech signal from the sequence of spectrogram frames.

In one example, the first acoustic data comprises a first element representing a fundamental frequency, a second element representing an energy and a third element representing a duration.

In one example, the acoustic data characteristics comprise statistical parameters relating to the fundamental frequency and energy generated from a first dataset corresponding to speech signals spoken in the first voice. In one example, the acoustic data characteristics comprise at least one of: a mean fundamental frequency value, a mean energy value, a standard deviation for the fundamental frequency and a standard deviation for the energy.

In one example, the method further comprises:

generating second acoustic data using an acoustic feature predictor model taking data from the second text data as input; and

generating an output speech signal using the text to speech synthesis model taking the second text data as input and using the second acoustic data, the output speech signal corresponding to the second text spoken in the first language.

In one example, the data from the second text data is the first sequence of representations.

In one example, the method further comprises:

generating multiple sets of acoustic data;

for each set of acoustic data, determining a value of a selection parameter;

selecting a set of acoustic data from the sets of acoustic data as the second acoustic data based on the selection parameter values.

In one example, the method further comprises:

generating multiple sets of acoustic data;

for each set of acoustic data, generating an output speech signal;

for each output speech signal, determining a value of a selection parameter; and

selecting the output speech signal provided based on the selection parameter values.

In one example, the method further comprises:

generating multiple sets of acoustic data;

for each set of acoustic data, generating a sequence of spectrogram frames;

for each sequence of spectrogram frames, determining a value of a selection parameter; and

selecting the sequence of spectrogram frames based on the selection parameter values.

In one example, the method further comprises:

generating one or more sets of acoustic data using an acoustic feature predictor model taking data from the second text data as input; and

for the modified first acoustic data and each set of acoustic data, determining a value of a selection parameter;

selecting one of the modified first acoustic data or a set of acoustic data from the sets of acoustic data based on the selection parameter values.

In one example, the method comprises:

for the output speech signal generated using the text to speech synthesis model taking the second text data as input and using the modified first acoustic data, determining a value of a selection parameter;

for the output speech signal generated using the text to speech synthesis model taking the second text data as input and using the second acoustic data, determining a value of a selection parameter; and

selecting the output speech signal provided based on the selection parameter values.

In one example, the acoustic feature predictor model has been trained using speech signals spoken in the first language and in the first voice.

In one example, generating the second acoustic data comprises sampling from a probability distribution. In one example, the acoustic feature predictor generates one or more parameters representing a probability distribution for one or more of the features in the acoustic data, and wherein the acoustic data is generated using the probability distribution. In another example, the acoustic feature predictor: generates one or more parameters representing a probability distribution; samples an intermediate variable from the probability distribution; and takes the intermediate variable as input to an acoustic feature predictor decoder, wherein the acoustic feature predictor decoder generates the acoustic data.

Also described herein is a computer implemented text to speech synthesis method, comprising:

obtaining a text signal;

obtaining a speech signal corresponding to the text signal, the speech signal spoken in a second voice:

extracting first acoustic data from the speech signal;

modifying the first acoustic data based on one or more acoustic data characteristics corresponding to a first voice; and

generating an output speech signal using a text to speech synthesis model taking the text signal as input and using the modified first acoustic data.

According to another aspect, there is provided a speech processing system, comprising one or more processors configured to:

receive a first speech signal corresponding to speech spoken in a second language;

generate first text data from the first speech signal, the first text data corresponding to text in the second language;

generate second text data from the first text data, the second text data corresponding to text in a first language;

responsive to obtaining a second speech signal corresponding to the second text spoken in the first language and in a second voice:

extract first acoustic data from the second speech signal;

modify the first acoustic data based on one or more acoustic data characteristics corresponding to a first voice; and

generate an output speech signal using a text to speech synthesis model taking the second text data as input and using the modified first acoustic data, the output speech signal corresponding to the second text spoken in the first language.

Also described herein is a text to speech synthesis system, comprising one or more processors configured to:

obtain a text signal;

obtain a speech signal corresponding to the text signal, the speech signal spoken in a second voice:

extract first acoustic data from the speech signal;

modify the first acoustic data based on one or more acoustic data characteristics corresponding to a first voice; and

generate an output speech signal using a text to speech synthesis model taking the text signal as input and using the modified first acoustic data.

Also described herein is a method of training a text to speech synthesis model, using a corpus of data comprising a plurality of speech signals spoken in a first voice and a plurality of corresponding text signals, the method comprising:

extracting acoustic data from the speech signals;

generating one or more acoustic data characteristics corresponding to the first voice from the extracted acoustic data;

generating an output speech signal using a text to speech synthesis model taking a text signal from the corpus as input and using the extracted acoustic data; and

updating one or more parameters of the text to speech synthesis model based on the corresponding speech signal from the corpus.

In one example, the method further comprises:

generating acoustic data using an acoustic feature predictor model taking data extracted from a text signal in the corpus as input; and

updating one or more parameters of the acoustic feature predictor model based on the extracted acoustic data from the corresponding speech signal.

In one example, generating acoustic data using an acoustic feature predictor model taking data extracted from the text signal as input comprises:

generating one or more parameters representing a probability distribution for an intermediate variable using an acoustic feature predictor encoder taking the extracted acoustic data and data extracted from the text signal as input;

sampling an intermediate variable from the probability distribution; and

generating the acoustic data taking the intermediate variable and the data extracted from the text signal as input to an acoustic feature predictor decoder.

In one example, the method further comprises:

generating one or more parameters representing a probability distribution for one or more of the features in the acoustic data using an acoustic feature predictor model taking data extracted from the text signal as input; and updating one or more parameters of the acoustic feature predictor model based on the extracted acoustic data from the corresponding speech signal.

In one example, the acoustic data comprises a first element representing a fundamental frequency, a second element representing an energy and a third element representing a duration.

Also described herein is a computer implemented speech processing method for generating translated speech, comprising:
receiving a first speech signal corresponding to speech spoken in a second language;

generating first text data from the first speech signal, the first text data corresponding to text in the second language;
generating second text data from the first text data, the second text data corresponding to text in a first language;
responsive to obtaining a second speech signal corresponding to the second text spoken in the first language and in a second voice:

extracting first acoustic data from the second speech signal;
modifying the first acoustic data based on one or more acoustic data characteristics corresponding to a first voice; and
generating an output speech signal using a text to speech synthesis model taking the second text data as input and using the modified first acoustic data, the output speech signal corresponding to the second text spoken in the first language, wherein the text to speech synthesis model is trained according to any of the above described methods.

Also described herein is a computer implemented text to speech synthesis method, comprising:

obtaining a text signal;
obtaining a speech signal corresponding to the text signal, the speech signal spoken in a second voice:

extracting first acoustic data from the speech signal;
modifying the first acoustic data based on one or more acoustic data characteristics corresponding to a first voice; and
generating an output speech signal using a text to speech synthesis model taking the text signal as input and using the modified first acoustic data, wherein the text to speech synthesis model is trained according to any of the above described methods.

Also described herein is a system, comprising one or more processors configured to:

receive a first speech signal corresponding to speech spoken in a second language;
generate first text data from the first speech signal, the first text data corresponding to text in the second language;
generate second text data from the first text data, the second text data corresponding to text in a first language;
responsive to obtaining a second speech signal corresponding to the second text spoken in the first language and in a second voice:

extract first acoustic data from the second speech signal;
modify the first acoustic data based on one or more acoustic data characteristics corresponding to a first voice; and
generate an output speech signal using a text to speech synthesis model trained according to any of the above described methods, and taking the second text data as input and using the modified first acoustic data, the output speech signal corresponding to the second text spoken in the first language.

Also described herein is a text to speech synthesis system, comprising one or more processors configured to:

obtain a text signal;
obtain a speech signal corresponding to the text signal, the speech signal spoken in a second voice:

extract first acoustic data from the speech signal;
modify the first acoustic data based on one or more acoustic data characteristics corresponding to a first voice; and
generate an output speech signal using a text to speech synthesis model trained according to any of the above described methods, taking the text signal as input and using the modified first acoustic data.

Also described herein is a computer implemented speech processing method for generating translated speech, comprising:

receiving a first speech signal corresponding to speech spoken in a second language;
generating first text data from the first speech signal, the first text data corresponding to text in the second language;
generating second text data from the first text data, the second text data corresponding to text in a first language;
generating acoustic data using an acoustic feature predictor model taking data from the second text data as input, wherein generating the acoustic data comprises sampling from a probability distribution; and
generating an output speech signal using a text to speech synthesis model taking the second text data as input and using the acoustic data, the output speech signal corresponding to the second text spoken in the first language.

In one example, the text to speech synthesis model has been trained using speech signals spoken in the first language.

In one example, the text to speech synthesis model comprises:

an acoustic model, comprising:

a first part, configured to generate a first sequence of representations corresponding to phonetic units from the second text data, wherein the acoustic data comprises an acoustic feature vector corresponding to each phonetic unit, and wherein each representation in the first sequence is combined with the corresponding acoustic feature vector to form a second sequence of enhanced representations; and
a second part, configured to generate a sequence of spectrogram frames from the second sequence of enhanced representations; and

a vocoder, configured to generate the output speech signal from the sequence of spectrogram frames.

In one example, the data from the second text data is the first sequence of representations.

In one example, the acoustic data comprises a first element representing a fundamental frequency, a second element representing an energy and a third element representing a duration.

In one example, the acoustic feature predictor generates one or more parameters representing a probability distribution for one or more of the features in the acoustic data, and wherein the acoustic data is generated using the probability distribution. In another example, the acoustic feature predictor: generates one or more parameters representing a probability distribution; samples an intermediate variable from the probability distribution; and takes the intermediate variable as input to an acoustic feature predictor decoder, wherein the acoustic feature predictor decoder generates the acoustic data.

In one example, the method further comprises:

generating multiple sets of acoustic data;
for each set of acoustic data, determining a value of a selection parameter;
selecting a set of acoustic data from the sets of acoustic data based on the selection parameter values.

In one example, the method further comprises:

generating multiple sets of acoustic data;
for each set of acoustic data, generating an output speech signal;
for each output speech signal, determining a value of a selection parameter; and
selecting the output speech signal provided based on the selection parameter values.

In one example, the method further comprises:

generating multiple sets of acoustic data;
for each set of acoustic data, generating a sequence of spectrogram frames;

for each sequence of spectrogram frames, determining a value of a selection parameter; and
selecting the sequence of spectrogram frames based on the selection parameter values.

Also described herein is a computer implemented text to speech synthesis method, comprising:

obtaining a text signal;
generating acoustic data using an acoustic feature predictor model taking the text signal as input, wherein generating the acoustic data comprises sampling from a probability distribution; and
generating an output speech signal using a text to speech synthesis model taking the text signal as input and using the acoustic data.

Also described herein is a system, comprising one or more processors configured to:

receive a first speech signal corresponding to speech spoken in a second language;
generate first text data from the first speech signal, the first text data corresponding to text in the second language;
generate second text data from the first text data, the second text data corresponding to text in a first language;
generate acoustic data using an acoustic feature predictor model taking data from the second text data as input, wherein generating the acoustic data comprises sampling from a probability distribution; and
generate an output speech signal using the text to speech synthesis model taking the second text data as input and using the acoustic data, the output speech signal corresponding to the second text spoken in the first language.

Also described herein is a text to speech synthesis system, comprising one or more processors configured to:

obtain a text signal;
generate acoustic data using an acoustic feature predictor model taking the text signal as input, wherein generating the acoustic data comprises sampling from a probability distribution; and
generate an output speech signal using a text to speech synthesis model taking the text signal as input and using the acoustic data.

Also described herein is a method of training a text to speech synthesis model, using a corpus of data comprising a plurality of speech signals and a plurality of corresponding text signals, the method comprising:

extracting acoustic data from the speech signals;
generating an output speech signal using a text to speech synthesis model taking a text signal from the corpus as input and using the extracted acoustic data from the corresponding speech signal;
updating one or more parameters of the text to speech synthesis model based on the corresponding speech signal from the corpus;
generating one or more parameters representing a probability distribution related to the acoustic data using an acoustic feature predictor model taking data extracted from the text signal as input; and
updating one or more parameters of the acoustic feature predictor model based on the extracted acoustic data from the corresponding speech signal.

In one example, the acoustic data comprises one or more acoustic features, and the one or more parameters represent a probability distribution for the one or more features.

In one example, the method further comprises generating acoustic data using the acoustic feature predictor model, wherein the one or more parameters represent a probability distribution for an intermediate variable, wherein the one or more parameters are generated using an acoustic feature predictor encoder taking the extracted acoustic data and the data extracted from the text signal as input, generating the acoustic data comprising:

sampling an intermediate variable from the probability distribution; and
generating the acoustic data taking the intermediate variable and the data extracted from the text signal as input to an acoustic feature predictor decoder;
updating one or more parameters of the acoustic feature predictor model based on the extracted acoustic data from the corresponding speech signal.

In one example, the acoustic data comprises a first element representing a fundamental frequency, a second element representing an energy and a third element representing a duration.

Also described herein is a computer implemented speech processing method for generating translated speech,

comprising:

receiving a first speech signal corresponding to speech spoken in a second language;
generating first text data from the first speech signal, the first text data corresponding to text in the second language;
generating second text data from the first text data, the second text data corresponding to text in a first language;
generating acoustic data using an acoustic feature predictor model taking data from the second text data as input, wherein generating the acoustic data comprises sampling from a probability distribution; and
generating an output speech signal using a text to speech synthesis model taking the second text data as input and using the acoustic data, the output speech signal corresponding to the second text spoken in the first language, wherein the text to speech synthesis model is trained according to any of the above described methods.

Also described herein is a computer implemented text to speech synthesis method, comprising:

obtaining a text signal;
generating acoustic data using an acoustic feature predictor model taking data extracted from the text signal as input, wherein generating the acoustic data comprises sampling from a probability distribution; and
generating an output speech signal using a text to speech synthesis model taking the text signal as input and using the acoustic data, wherein the text to speech synthesis model is trained according to any of the above described methods.

Also described herein is a system, comprising one or more processors configured to:

receive a first speech signal corresponding to speech spoken in a second language;
generate first text data from the first speech signal, the first text data corresponding to text in the second language;
generate second text data from the first text data, the second text data corresponding to text in a first language;
generate acoustic data using an acoustic feature predictor model taking data from the second text data as input, wherein generating the acoustic data comprises sampling from a probability distribution; and
generate an output speech signal using a text to speech synthesis model trained according to any of the above described methods, and taking the second text data as input and using the acoustic data, the output speech signal corresponding to the second text spoken in the first language.

Also described herein is a text to speech synthesis system, comprising one or more processors configured to:

obtain a text signal;
generate acoustic data using an acoustic feature predictor model taking data extracted from the text signal as input, wherein generating the acoustic data comprises sampling from a probability distribution; and
generate an output speech signal using a text to speech synthesis model taking the text signal as input and using the acoustic data, wherein the text to speech synthesis model is trained according to any of the above described methods.

Also described herein is a computer implemented speech processing method for generating translated speech comprising:

receiving a first speech signal corresponding to speech spoken in a second language;
generating first text data from the first speech signal, the first text data corresponding to text in the second language;
generating second text data from the first text data, the second text data corresponding to text in a first language;
generating an output speech signal using a text to speech synthesis model taking the second text data as input, the output speech signal corresponding to the second text spoken in the first language;
determining a selection parameter, wherein the output speech signal depends on a value of the selection parameter.

In one example, the method further comprises:

generating multiple sets of acoustic data;
for each set of acoustic data, determining the value of the selection parameter; and
selecting a set of acoustic data from the sets of acoustic data based on the selection parameter values, wherein the selected set of acoustic data is used to generate the output speech signal.

In one example, generating multiple sets of acoustic data comprises using multiple acoustic feature predictor models to generate respective sets of acoustic data, each taking data from the second text data as input.
Each set of acoustic data may comprise an acoustic feature vector corresponding to each phonetic unit from the second text data, wherein the acoustic feature vector comprises a first element representing a predicted fundamental frequency, wherein the selection parameter value is determined by calculating a variance of the fundamental frequency. Selecting the first set of acoustic data may comprise selecting the set of acoustic data with the greatest variance of the fundamental frequency.

The text to speech synthesis model may comprise:

an acoustic model, comprising:

a first part, configured to generate a first sequence of representations corresponding to the phonetic units from the second text data, wherein each representation in the first sequence is combined with the corresponding acoustic feature vector of the first acoustic data to form a sequence of enhanced representations; and
a second part, configured to generate a sequence of spectrogram frames from the second sequence of enhanced representations; and

a vocoder, configured to generate the output speech signal from the sequence of spectrogram frames.

In one example, the method further comprises:

generating multiple sequences of spectrogram frames;
for each sequence of spectrogram frames, determining a value of the selection parameter; and
selecting the sequence of spectrogram frames based on the selection parameter values.

In one example, the method may further comprise:

generating multiple output speech signals;
for each output speech signal, determining a value of the selection parameter; and
selecting the output speech signal based on the selection parameter values.

In one example, the method comprises, for each set of acoustic data, generating a respective output speech signal using the text to speech synthesis model taking the second text data as input and using the set of acoustic data, the respective output speech signal corresponding to the second text spoken in the first language.

Also described herein is a computer implemented method of training a text to speech synthesis model, using a corpus of data comprising a plurality of speech signals spoken in a first voice and a plurality of corresponding text signals, the method comprising:

extracting acoustic data from the speech signals;
generating an output speech signal using a text to speech synthesis model taking a text signal from the corpus as input and using the extracted acoustic data; and
updating one or more parameters of the text to speech synthesis model based on the corresponding speech signal from the corpus;
generating a first set of acoustic data using a first acoustic feature predictor model taking data extracted from a text signal in the corpus as input;
updating one or more parameters of the first acoustic feature predictor model based on the extracted acoustic data from the corresponding speech signal;
generating a second set of acoustic data using a second acoustic feature predictor model taking data extracted from a text signal in the corpus as input; and
updating one or more parameters of the second acoustic feature predictor model based on the extracted acoustic data from the corresponding speech signal.

Also described herein is a computer implemented speech processing method for generating translated speech comprising:

receiving a first speech signal corresponding to speech spoken in a second language;
generating first text data from the first speech signal, the first text data corresponding to text in the second language;
generating second text data from the first text data, the second text data corresponding to text in a first language;
generating an output speech signal using a text to speech synthesis model taking the second text data as input, the output speech signal corresponding to the second text spoken in the first language, wherein the text to speech synthesis model is trained according to any of the above methods; and

determining a selection parameter, wherein the output speech signal depends on a value of the selection parameter.

In one example, the method further comprises:

generating multiple sets of acoustic data;
for each set of acoustic data, determining the value of the selection parameter; and
selecting a set of acoustic data from the sets of acoustic data based on the selection parameter values, wherein the selected set of acoustic data is used to generate the output speech signal.

Also described herein is a system, comprising one or more processors configured to:

receive a first speech signal corresponding to speech spoken in a second language;
generate first text data from the first speech signal, the first text data corresponding to text in the second language;
generate second text data from the first text data, the second text data corresponding to text in a first language;
generate an output speech signal using a text to speech synthesis model taking the second text data as input, the output speech signal corresponding to the second text spoken in the first language; and
determine a selection parameter, wherein the output speech signal depends on a value of the selection parameter.

In one example, the one or more processors are further configured to:

generate multiple sets of acoustic data;
for each set of acoustic data, determine the value of the selection parameter; and
select a set of acoustic data from the sets of acoustic data based on the selection parameter values, wherein the selected set of acoustic data is used to generate the output speech signal.

Also described herein is a system, comprising one or more processors configured to:

receive a first speech signal corresponding to speech spoken in a second language;
generate first text data from the first speech signal, the first text data corresponding to text in the second language;
generate second text data from the first text data, the second text data corresponding to text in a first language;
generate an output speech signal using a text to speech synthesis model trained according to the above methods and taking the second text data as input, the output speech signal corresponding to the second text spoken in the first language; and
determine a selection parameter, wherein the output speech signal depends on a value of the selection parameter.

In one example, the one or more processors are further configured to:

generate multiple sets of acoustic data;
for each set of acoustic data, determine the value of the selection parameter; and
select a set of acoustic data from the sets of acoustic data based on the selection parameter values, wherein the selected set of acoustic data is used to generate the output speech signal.

According to another aspect, there is provided a carrier medium comprising computer readable code configured to cause a computer to perform any of the above methods. According to another aspect, there is provided a non-transitory computer readable storage medium comprising program instructions stored thereon that are executable by a computer processor to perform any of the above described methods. The methods are computer-implemented methods. Since some methods in accordance with embodiments can be implemented by software, some embodiments encompass computer code provided to a general purpose computer on any suitable carrier medium. The carrier medium can comprise any storage medium such as a floppy disk, a CD ROM, a magnetic device or a programmable memory device, or any transient medium such as any signal e.g. an electrical, optical or microwave signal. The carrier medium may comprise a non-transitory computer readable storage medium.

BRIEF DESCRIPTION OF FIGURES

Systems and methods in accordance with non-limiting embodiments will now be described with reference to the accompanying figures in which:

Figure 1 is a schematic illustration of a speech processing system according to an example;

Figure 2(a) is a schematic illustration of a text to speech module which may be used in a speech processing system according to an example;

Figure 2(b) is a schematic illustration of an example encoder model;

Figure 2(c) is a schematic illustration of an example acoustic feature predictor model according to an example;

Figure 2(d) is a schematic illustration of an example decoder model;

Figure 3(a) is an example of a first training stage which may be performed as part of a training method;

Figure 3(b) is an example of a method performed during a second training stage;

Figure 4(a) is a schematic illustration of a speech processing system according to an example;

Figure 4(b) is a schematic illustration of the speech processing system according to the example;

Figure 4(c) shows an example method which may be performed using the system described in relation to Figures 4(a) and (b);

Figure 5(a) is a schematic illustration of a text to speech module which may be used in a speech processing system according to an example;

Figure 5(b) is a schematic illustration of an example acoustic feature predictor model according to an example;

Figure 6 is an example of a method performed during a second training stage;

Figure 7(a) is a schematic illustration of a text to speech module which may be used in a system according to an example;

Figure 7(b) is a schematic illustration of an example structure for the acoustic feature predictor decoder shown in Figure 7(a);

Figure 8(a) is an example of a method performed during a second training stage;

Figure 8(b) is a schematic illustration of an example acoustic feature predictor encoder used in the method of Figure 8(a);

Figure 9(a) is a schematic illustration of a bidirectional long short-term memory layer;

Figure 9(b) shows a schematic illustration of a first long short-term memory structure;

Figure 9(c) shows a schematic illustration of the second long short-term memory structure;

Figure 10 shows results of a preference test;

Figure 11 is a schematic illustration of a text to speech module which may be used in a speech processing system according to an example;

Figure 12 shows a schematic illustration of a system for processing a speech signal in accordance with an example;

Figure 13(a) is a schematic illustration of a text to speech module comprising an acoustic feature predictor model ensemble, which may be used in a speech processing system according to an example;

Figure 13(b) is a schematic illustration of an example acoustic feature predictor model ensemble according to an example;

Figure 13(c) is a schematic illustration of an example acoustic feature predictor model according to an example; and

Figure 14 shows a box plot diagram of the difference in variance of the fundamental frequency for a selection of ten speakers.

DETAILED DESCRIPTION

Spoken language translation systems can generate speech in a target language from a textual translation of speech in source language. Such systems may use an automatic speech recognition (ASR) model, a text-to-text translation model and text-to-speech (TTS) model. Text data is extracted from a speech utterance in the source language using ASR. The text is translated into the target language using the text-to-text translation model. The target language text data is then used to generate a speech utterance in the target language. A TTS model which is trained using speech data corresponding to a first speaker may be used to generate the speech utterance in the target language. The TTS model may use a trained model to generate acoustic features from the target language text data. It then uses these to generate the speech in the target language, such that the generated speech sounds like the first speaker. However, in some cases, the speech utterance generated in the target language does not have the correct rendition. For some utterances, modelling the prosody is difficult, since the TTS model may have no ability to model the context used to predict the prosody. For example, the phrase "The car was there yesterday" could be spoken in various ways, with differing emotion or emphasis.

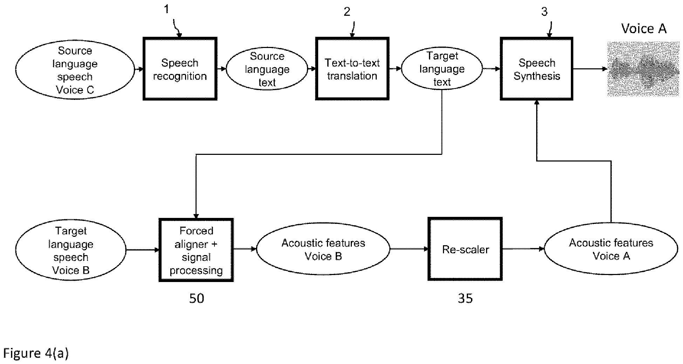

As will be described in relation to Figure 4(a) below for example, for such utterances, a further speech signal corresponding to the target language text spoken in a different (second) voice is obtained. Acoustic features are then extracted from this further speech signal. Since acoustic features are extracted from the speech audio signal, rather than being predicted from the target language text for example, they capture variation across the phones in the utterance more accurately. However, the acoustic features retain characteristics of the second speaker, meaning that speech generated by the TTS model using these acoustic features would sound different to speech generated by the TTS model using predicted acoustic features. In other words, the output speech could include utterances which sound like the first speaker (where the speech is generated using predicted acoustic features) and utterances which sound like the second speaker (where the speech is generated using the acoustic features extracted from the new audio in the target language).

As will be described in relation to Figure 4(a), the TTS model stores acoustic data characteristics corresponding to the first speaker. One or more acoustic features extracted from the further speech signal are modified using the stored characteristics corresponding to the first speaker. In particular, these acoustic features are re-scaled so as to retain the per phone variation of the extracted features but to capture characteristics of the first speaker. The output speech signal is then generated using the TTS model taking the target language text as input and using the modified acoustic features. Since the TTS model is trained to use acoustic features to generate the output speech, it is possible to extract these acoustic features from different audio signals during inference, and therefore improve the naturalness of the generated speech.

Various example components of a speech processing system will now be described.

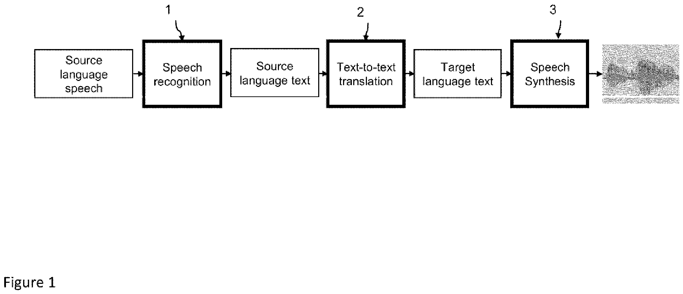

Figure 1 is a schematic illustration of a speech processing system according to an example. The system performs spoken language translation. A first speech signal comprising speech in a source language (second language) is inputted. This is an audio signal, for example comprising spoken text received by a microphone. The first speech signal may be a received audio file. The first speech signal is input to a speech recognition module 1, which produces text in the source language. Any type of speech recognition process may be used in the speech recognition module 1. For example, a trained speech recognition module 1, which has been previously trained using audio and text data in the source language, may be used. For example, a neural network or Hidden Markov Model based system that is deployed locally, over the cloud, or third-party APIs may be used. The source language text is then input to a text-to-text translation module 2, producing output text in the target language (first language). Any type of text-to-text translation process may be used in the text-to-text translation module 2. For example, a trained text-to-text translation module 2, which has been previously trained using text data in the source and target languages, may be used. A text-to-speech module 3 then takes in the target language text and produces audio output in the target language.

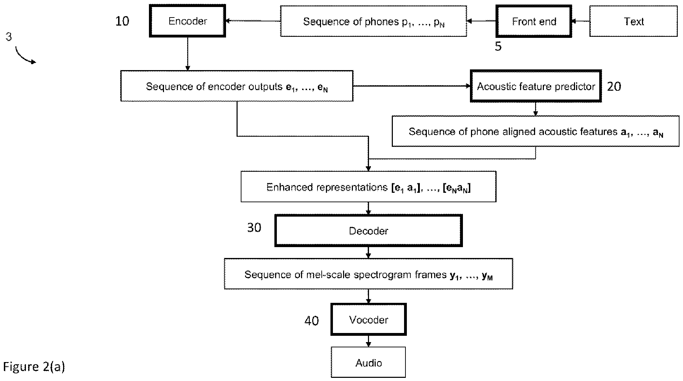

Figure 2(a) is a schematic illustration of a text to speech module 3 which may be used in a speech processing system according to an example. In one example, the text to speech module 3 may be used in a speech processing system as described in relation to Figure 1. The processing performed by the text to speech module 3 during inference, or deployment, will now be described in relation to Figure 2(a).

The text to speech module 3 takes text data as input. In particular, the module takes orthographic text data as input. In one example, the text data comprises a sequence of orthographic character encodings. The text data represents a phrase in a first language.

The text data may be output from a text to text translation system 2 as described in relation to Figure 1.

The input text data is taken as input to a front end model 5. The front end model comprises a text to phone model, that converts the sequence of text into a sequence of phones, including special tokens for silences and the start and end of sentences and words. Various phonetic alphabets may be used, for example X-SAMPA. The front-end model 5 may comprise a stored dictionary or a set of stored rules for example. Various grapheme-to-phoneme (G2P) models are available and could be used as the front-end model 5. An example model G2P model which may be used as a front-end model 5 is described in "Neural machine translation for multilingual grapheme-to-phoneme conversion", Sokolov et al, arXiv:2006.14194, the entire contents of which are incorporated by reference herein.

In this example, each output phone is represented by a number from a set of numbers, where different numbers in the set represent different phones. A further number in the set represents a silence. One or more further numbers in the set may represent sentence and word boundaries. The output units in the sequence are referred to here as $p_i$, where i represents the position in the sequence from the first unit $p_1$ in the phrase to the last unit $p_N$ in the phrase. A unit may be a phone, silence or boundary. A phone is a distinct speech sound. Although a sequence of phones $p_1$ to $p_N$ is referred to in the following description, it is to be understood that silences, word boundaries and sentence boundaries are also represented as units $p_i$ in this sequence.

The sequence of phones $p_1$ to $p_N$ is taken as input to an encoder model 10. The encoder model 10 outputs a sequence of encoder outputs $e_1$ to $e_N$. Each encoder output $e_i$ in the sequence comprises a vector. In this example, each encoder output $e_i$ is a 384 dimensional vector. The encoder model 10 is a learned model.

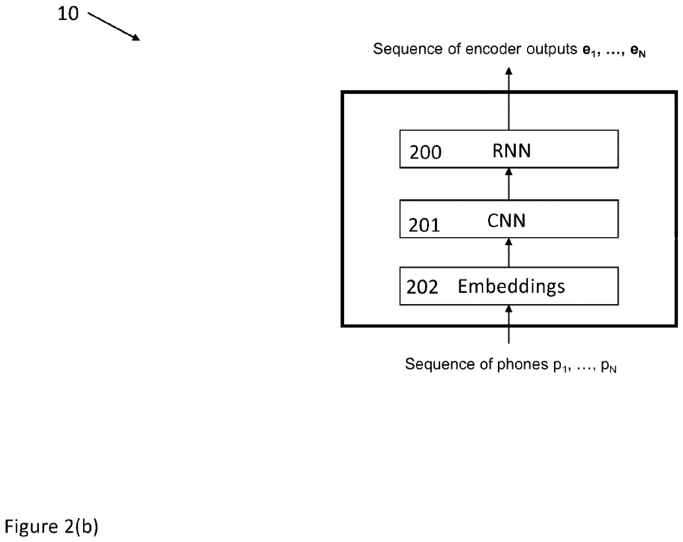

An example encoder model 10 will now be described in relation to Figure 2(b). However, it will be understood that various encoder models may be used to generate a sequence of phone encodings from sequence of phones $p_1$ to $p_N$ output by the front end model 5.

In this example, the encoder model 10 comprises a stored embedding table 202, which comprises a set of learned embeddings, each corresponding to a different unit. Each phone in the input sequence is mapped to its corresponding embedding in the stored table 202. Each phone in the input sequence is thus represented using the corresponding embedding from the stored table. The silences, word boundaries and sentence boundaries are also mapped to a corresponding embedding. In this example, the stored embeddings are 384 dimensional vectors.

The encoder model 10 further comprises a set of one or more learned convolutional neural network layers 201. The sequence of N embeddings output from 202 are combined and taken as a single input to the set of convolutional neural network layers 201. In this example, the input data has a height of 384, a depth of 1 and a width of N. In this example, the encoder model 10 comprises three convolutional layers. In this example, the first layer comprises 384 filters, each having a height of 384, a depth of 1 and a width of 5. Each filter therefore corresponds to 5 phones. The depth of the output of a convolutional layer corresponds to the number of filters in the layer. In this example, there are 384 filters in the first convolutional layer, and therefore the output of the first convolutional layer has a depth of 384. Each filter is moved along the width and height of the input data. At each position, the values in the filter are element-wise multiplied with the input data values, and the results are summed, resulting in a single value for each filter position. In this example, the stride is 1, therefore the filters slide one data point at a time. The height of the output of the first convolutional layer is 1 and the width is N. The second convolutional layer also comprises 384 filters. Each filter has a depth of 384, a width of 5 and a height of 1. The output of the second convolutional layer has a depth of 384, a width of N and a height of 1. The third convolutional layer also comprises 384 filters. Each filter has a depth of 384, a width of 5 and a height of 1. The output of the third convolutional layer has a depth of 384, a width of N and a height of 1. In this example, a batch normalisation layer is also implemented after each convolutional layer, and an activation layer is also implemented after each batch normalisation layer. In this example, the model uses ReLU (rectified linear unit) activation. Other combinations of convolutional layers may be used in other examples, or alternatively, the set of one or more convolutional layers may be omitted. Including the set of one or more convolutional layers allows context information to be captured from the sequence of phones.

The encoder model 10 further comprises a recurrent neural network (RNN) layer. In this example, the RNN layer is a bidirectional LSTM (long short-term memory) layer 200. The output of the set of one or more convolutional layers 201 has dimension N x 384 x 1 in this example. This is processed by the bidirectional LSTM as a sequence of N vectors, each vector being of length 384. As has been described previously, N is the number of units in the input sequence.

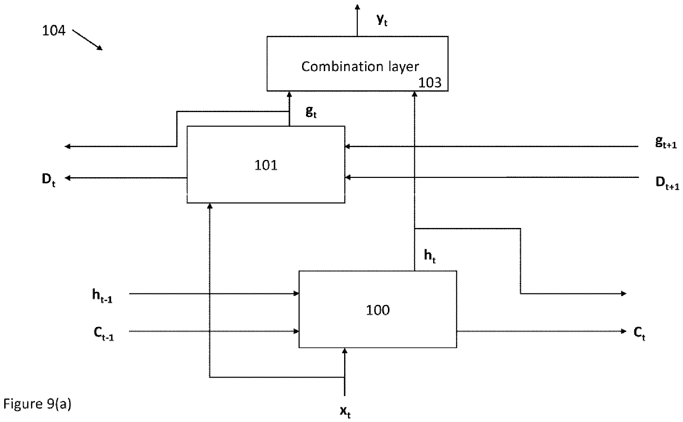

Figure 9(a) is a schematic illustration of a bidirectional LSTM layer 104. A bidirectional layer as shown in Figure 9(a) is used in the encoder model 10 in this example. The index t represents the position in the input sequence. When a bidirectional LSTM layer 104 is used in the encoder model 10, the index t corresponds to the phone index i, which runs from 1 to N. Each input $x_i$ corresponds to a 384 dimensional vector taken from the output of the convolutional layers 201.

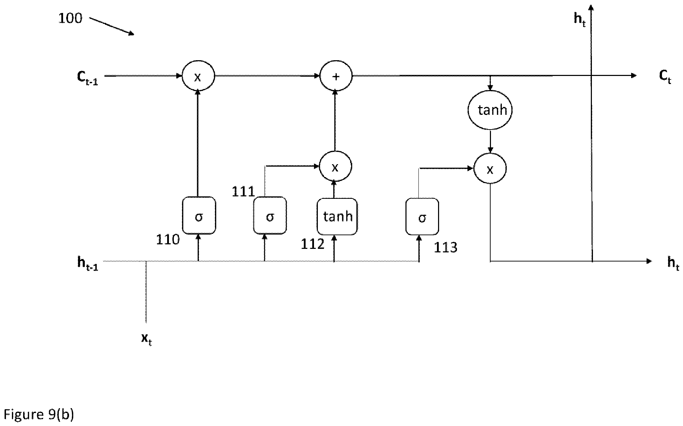

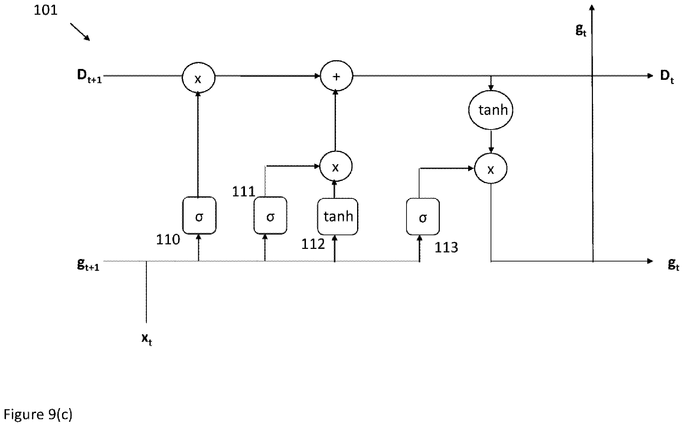

The bidirectional LSTM 104 comprises a first LSTM structure 100 and a second LSTM structure 101. Figure 9(b) shows a schematic illustration of the first LSTM structure 100 and Figure 9(c) shows a schematic illustration of the second LSTM structure 101.

In the encoder module 10, each vector $x_i$ is inputted in to the first LSTM structure 100 in sequence, with $x_1$ input first, and $x_N$ input last. At each step in the sequence, the first LSTM 101 outputs a vector $h_i$. The vector $h_i$ has length H, which is also referred to as the unit size. In this example, in the bidirectional LSTM used in the encoder module 10, the unit size is 384. The $\sigma$ and tanh in the boxes each represent a learned neural network layer with the respective non-linear activation function indicated (sigmoid and tanh). The tanh, addition and other operations in the circles represent point-wise operations. The output $h_i$ for the input vector $x_i$ is passed on to the next sequence step, and input at the point indicated by $h_{i-1}$. Furthermore, the output cell state $C_i$ is passed on to the next sequence step and input at the point indicated by $C_{i-1}$. For the first step, a zero valued vector is used for the previous hidden state and the previous cell state.

Within the LSTM structure 100, the input feature vector $x_i$ and the output from the previous step $h_{i-1}$ are

concatenated, to form a first combined vector. The first LSTM structure 100 comprises four neural network layers, 110, 111, 112 and 113. Three of these, 110, 111 and 113, have a sigmoid activation function and one 112 has a tanh activation function. The first sigmoid layer 110 takes the first combined vector as input, and outputs a second vector. The second vector has length H. Cell state C is also a vector of length H. The cell state from the previous step $C_{i-1}$ is multiplied with the second vector in a pointwise multiplication (Hadamard product) to give a third vector, again having the length H. The second sigmoid layer 111 again takes the first combined vector as input, and outputs a fourth vector. The fourth vector again has the length H. The tanh layer 112 also takes the first combined vector as input, and outputs a fifth vector of length H. The fourth vector is multiplied with the fifth vector in a pointwise multiplication to give a sixth vector, again having the length H. The third vector and sixth vector are then added in a pointwise vector addition to give the cell state for the current time step, $C_i$. The third sigmoid layer 113 also takes the first combined vector as input, and outputs a seventh vector. The seventh vector again has the length H. The cell state values are each input to a tanh function. The output of this function is then multiplied in a point wise multiplication with the seventh vector, to give the output for the step i, $h_i$.

The second LSTM structure 101 has the same structure as the first LSTM structure 100, however the order of the sequence is reversed. The output $g_{i+1}$ for the input vector $x_{i+1}$ is taken as input together with the current input vector $x_i$ in the sequence, at the point indicated by $g_{i+1}$. Furthermore, the output cell state $D_{i+1}$ is input at the point indicated by $D_{i+1}$ together with the current input vector $x_i$.

For each input vector $x_i$ in the sequence, the first LSTM structure 100 outputs an output vector $h_i$ having length H, and the second LSTM structure 101 outputs an output vector $g_i$ having length H. These are combined in a combination layer 103 to give an output vector. Thus the bidirectional LSTM in the encoder module 10 outputs a sequence of vectors corresponding to the sequence of phones. In this example, the output vector $h_i$ and the output vector $g_i$ are concatenated in the combination layer 103 to give an output vector of length 2H.

Although a specific example based on a bi-directional LSTM is described here, other types of recurrent neural networks (RNN) may be used in the encoder module 10 in other examples, for example a uni-directional LSTM or a Gated Recurrent Unit (GRU). Alternatively, the RNN may be omitted. Including an RNN allows sequential dependencies to be captured in the encoding. Including a bidirectional RNN allows sequential dependencies in both directions to be captured in the encoding. Using an LSTM allows longer term dependencies to be captured.

In some examples, the encoder model 10 may take one or more additional inputs. In this example, the encoder 10 takes an additional input indicating a speaker, from a set of possible speakers. This input is referred to as a Speaker ID. The Speaker ID is in the form of a one hot vector, which is a vector having dimension corresponding to the number of possible speakers in the set, where the entry corresponding to the designated speaker is 1 and the other entries 0. The Speaker ID may be manually input by a user, or may be generated using a trained model. For example, a trained model may take the source language audio as input and generate a Speaker ID vector. The Speaker ID vector is mapped to a learned embedding using a stored look-up table. Each possible Speaker ID is mapped to a learned embedding. Each possible Speaker ID is stored in a lookup table for example, with the corresponding embedding. These embeddings are learned parameters of the encoder model 10. Additionally or alternatively, the encoder 10 may take an additional input indicating the first language from a set of possible languages. This input is also referred to as a Language ID. Additionally or alternatively, the encoder 10 may take an additional input indicating a source audio style, from a set of possible styles. This input is also referred to as a Style ID. These inputs may again be manually inputted by a user of the system, or automatically obtained using a trained model for example. These inputs may again each be in the form of a one hot embedding, which is mapped to a learned embedding using a stored look-up table. These embeddings are also referred to here as additional representations. In this example, the learned speaker, style and language embeddings (additional representations) selected for the input utterance are concatenated to each output of the bi-directional LSTM 104 in the sequence, to form the final encoder output sequence $e_1$ to $e_N$. The final encoder output sequence $e_1$ to $e_N$ is a first sequence of representations.

In this example, the sequence of encoder outputs $e_1$ to $e_N$ is taken as input to an acoustic feature predictor (AFP) model 20 in the TTS 3. In some other examples, an intermediate sequence is taken from the encoder 10 and inputted to the AFP 20. For example, the output of the set of convolutional layers 201 may be concatenated with any additional representations as described above, and taken as input to the AFP 20.

The AFP 20 is a learned model. In this example, the AFP 20 is an autoregressive model, where the previous nl predicted acoustic features are used to predict each acoustic feature in the sequence, where nl is a positive integer. In other examples however, non-autoregressive models may be used.

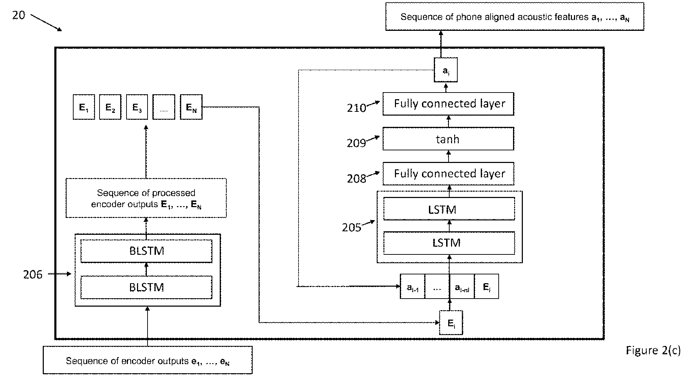

Figure 2(c) is a schematic illustration of an example AFP 20 according to an example. In this example, the AFP 20 comprises a first stacked LSTM block 206, comprising two layers of bidirectional LSTMs. The encoder outputs $e_1$ to $e_n$ are taken in sequence as input to the first stacked LSTM block 206, and are mapped to a sequence of 64-dimensional hidden states. The first LSTM block 206 outputs a sequence of N 64-dimensional vectors, $E_1, ..., E_N$. Each bidirectional LSTM in the first block 206 corresponds to a bidirectional LSTM 104 as described in relation to Figure 9(a) in this example, where each input $x_t$ to the first BLSTM in the first block 206 corresponds to an encoder output $e_i$. The ith input to the second BLSTM in the first block 206 corresponds to the ith output of the first BLSTM in the first block 206. The unit size of both BLSTMs is 64 in this example.

The AFP 20 further comprises a second stacked LSTM block 205, comprising two layers of unidirectional LSTMs. The sequence of N vectors , $\mathbf{E_1}$, ..., $\mathbf{E_N}$ output from the first LSTM block 206 are taken in sequence as input to the second stacked LSTM block 205. Each vector $\mathbf{E_i}$ is concatenated with the previous nl acoustic feature vectors $\mathbf{a_{i-1}}$ to $\mathbf{a_{i-nl}}$, where nl is a postive integer value, before being input to the second LSTM block 205. In this example, nl is 5. For the first (nl + 1) input vectors in the sequence, zero valued vectors are used for the previous acoustic feature vectors. The second LSTM block 205 maps the inputs to a sequence of 32-dimensional vectors. Each LSTM in the second block 205 corresponds to a LSTM 104 as described in relation to Figure 9(b) in this example. Each input $\mathbf{x_t}$ to the first LSTM corresponds to the vector $\mathbf{E_i}$ concatenated with the previous nl acoustic feature vectors. The ith input to the second LSTM corresponds to the ith output of the first LSTM. The unit size of both LSTMs is 32 in this example.

The output sequence of vectors from the second LSTM block 205 is taken as input to a fully connected neural network layer 208. Each vector in the sequence is taken as input to the fully connected layer 208 in turn, where the output of the fully connected layer 208 for each input vector is a 16 dimensional vector. A sequence of N 16-dimensional embeddings are therefore output from the fully connected layer 208, and a tanh nonlinearity is applied. A tanh function is applied to each vector in the sequence, followed by a fully connected layer comprising 3 neurons, which projects each vector down to 3 dimensions. The output of the fully connected layer 201 is the predicted acoustic features corresponding to each phone in the encoder input, $\mathbf{a_1}$ to $\mathbf{a_N}$. The AFP 20 therefore outputs a sequence of N 3-dimensional vectors, $\mathbf{a_1}$ to $\mathbf{a_N}$. These are the sequence of phone aligned acoustic features.

Although in this example, the AFP 20 takes as input the sequence of encoder outputs only, in other examples, the AFP 20 takes additional inputs. For example, the AFP 20 may take as input one or more features extracted from the input source language audio. Each vector in the sequence of phone aligned acoustic features $\mathbf{a_1}$ to $\mathbf{a_N}$ is then concatenated to the corresponding vector in the sequence of encoder outputs $\mathbf{e_1}$ to $\mathbf{e_N}$ to form a sequence of enhanced representations $[\mathbf{e_1 a_1}]$, ....., $[\mathbf{e_N a_N}]$.

This sequence of enhanced representations is then taken as input to the decoder 30. The decoder 30 is a learned model. In this example, the decoder 30 is an autoregressive model. In other examples, the frames are generated as a single combined output.

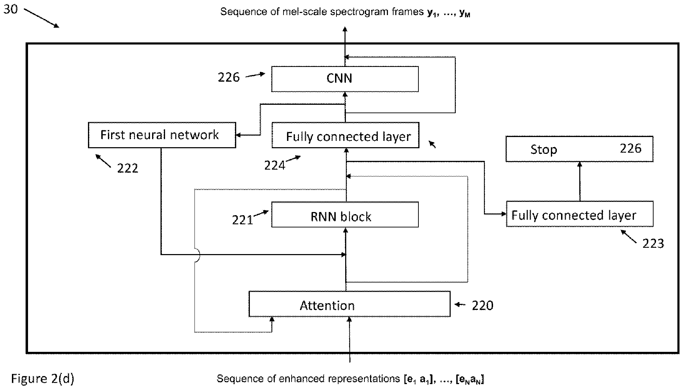

An example decoder model 30 will now be described in relation to Figure 2(d). However, it will be understood that various decoder models may be used to generate a sequence of spectrograms.

The decoder 30 is a learned model. The decoder 30 autoregressively predicts the sequence of spectrogram frames $\mathbf{y_1}$ to $\mathbf{y_M}$. In this example, each decoding step j outputs four spectrogram frames, where j runs from 1 to (M/4).

At each decoding step j, the entire sequence of enhanced representations $[\mathbf{e_1 a_1}]$, ....., $[\mathbf{e_N a_N}]$ is taken as input to an attention mechanism 220. The attention mechanism 220 also takes as input the output of the LSTM block 221 for the previous decoding step j-1. The attention mechanism 220 outputs an attention context vector $\mathbf{A_j}$ for the decoding step j. This allows information from the relevant phone representations to be provided at each decoding step. The attention mechanism 220 will be described in more detail below. The number of mel spectrogram frames M is different to the number of phones N. The attention mechanism allows the most relevant phones to provide the context information for the current decoding step j.

The attention context vector $\mathbf{A_j}$ for the decoding step j is concatenated with the output of the first neural network 222 for the previous time step j-1. This is taken as input to the RNN block 221. In this example, the RNN block 221 is an LSTM block 221. The LSTM block 221 outputs a vector for the step j. In this example, the LSTM block 221 comprises two stacked LSTM layers. The LSTM layers are uni-directional (forward) LSTM layers. Figure 9(b) illustrates a unidirectional LSTM layer 100. In this case, the index (shown as t in Figure 9(b)) corresponds to the decoding step index j. For the decoding step j, the input vector $\mathbf{x_j}$ to the first LSTM layer corresponds to the attention context vector $\mathbf{A_j}$ for the decoding step j concatenated with the output of the first neural network 222 for the previous time step j-1. An LSTM structure 100 has been described previously in relation to Figure 9(b). The output of the first LSTM layer for decoding step j is taken as input to the second LSTM layer for decoding step j. The unit size for both LSTM layers in the LSTM block 221 is 1024 in this example. The output vector of the second LSTM layer for the decoding step j is referred to here as $\mathbf{s_j}$ and corresponds to the output of the LSTM block 221 for step j. This is a 1024-dimensional vector in this example. Including an RNN allows sequential dependencies to be captured.

The LSTM block 221 output $\mathbf{s_j}$ for the decoding step j is concatenated with the attention context vector $\mathbf{A_j}$ for the decoding step j and the resulting vector taken as input to a first fully connected layer 224, which is a learned neural network layer. The first fully connected layer 224 outputs a vector for the decoding step j. The first fully connected layer comprises 512 neurons in this example. A 512-dimensional vector is outputted from the first fully connected layer 224. This corresponds to four spectrogram frames, with each spectrogram frame corresponding to a 128 dimensional vector. The first fully connected layer 224 outputs the initial predictions for the four spectrogram frames. The first fully connected layer 224 predicts four frames at a time in this example. The output of the first fully connected layer 224 is converted into four 128 dimensional vectors, corresponding to a sequence of four predicted spectrogram frames.

The last frame in the sequence generated from the output of the first fully connected layer 224 for the decoding step j is taken as input to the first neural network 222, which is a learned neural network. The first neural network 222 comprises two fully connected layers in this example. In this example, each layer comprises 64 neurons. A ReLU activation function is applied to the output of each neuron. Dropout is applied during inference after the activation function. A dropout layer randomly sets some of the values to 0, with a rate dr. The rate dr is set between 0 and 1. Values which are not set to 0 are scaled by 1/(1 - dr). In this example, dr=0.5. The first neural network 222 outputs a 64-dimensional vector for the decoding step j. This output is smaller than the mel spectrogram frame dimension, meaning that the first neural network 222 acts as a bottleneck. The output of the first neural network 222 for the decoding step j is concatenated with the attention context vector $A_j$ for the decoding step j+1 and taken as input to the LSTM block 221.

At decoding step j, a prediction is also made as to whether to stop decoding upon completion of the current step j. The output of the LSTM block 221 $s_j$ for the decoding step j concatenated with the attention context vector $A_j$ for the decoding step j is also taken as input to a second fully connected layer 223, which is a learned neural network layer comprising 1 neuron, followed by a sigmoid activation function. If the output of this layer 223 is greater than 0.5, the decoding step j is taken to be the final decoding step (M/4).

The output of the first fully connected layer 224 for all of the decoding steps are combined and taken as input to the learned convolutional neural network 226. The convolutional neural network 226 predicts a residual to be added to the initial spectrogram frame prediction. The convolutional neural network 226 comprises five convolutional layers in this example. Each layer comprises 512 filters. In this example, the input data has a height of 128, a depth of 1 and a width of M. In this example, the first layer comprises 512 filters, each having a height of 128, a depth of 1 and a width of 5. Each filter therefore corresponds to 5 spectrogram frames. In this example, since there are 512 filters in the first convolutional layer, the output of the first convolutional layer has a depth of 512. In this example, the stride of the CNN 226 is 1. In this case, the height of the output of the first convolutional layer is 1 and the width is M. The second convolutional layer comprises 512 filters. Each filter has a depth of 512, a width of 5 and a height of 1. The output of the second convolutional layer has a depth of 512, a width of M and a height of 1. The third convolutional layer comprises 512 filters. Each filter has a depth of 512, a width of 5 and a height of 1. The output of the third convolutional layer has a depth of 512, a width of M and a height of 1. The fourth convolutional layer comprises 512 filters. Each filter has a depth of 512, a width of 5 and a height of 1. The output of the fourth convolutional layer has a depth of 512, a width of M and a height of 1. The fifth convolutional layer comprises 512 filters. Each filter has a depth of 512, a width of 5 and a height of 1. The output of the fifth convolutional layer has a depth of 512, a width of M and a height of 1. In this example, a batch normalisation layer is implemented after each convolutional layer other than the fifth layer, and an activation layer is also implemented after each batch normalisation layer. In this example, the model uses tanh activations. Dropout is also applied every layer during inference. In this example, the dropout rate is 0.5. The output of the fifth layer is then added in a pointwise addition operation to each output frame from the first fully connected layer 224. The output of the convolutional neural network 226 is thus added to the output of the first fully connected layer 224 for each frame, giving the output spectrogram frames $y_1,$ ..., $y_M$.

An example attention mechanism 220 will now be described. The attention mechanism 220 may be an attention mechanism such as described in "Attention-Based Models for Speech Recognition", Chorowski et al, in Proc. NIPS, 2015, pages 577 to 585, the entire contents of which are incorporated by reference herein. An example attention mechanism 220 which is used in the decoder 30 in this example will be described below. However, different attention mechanism models may be used in the decoder.

For a decoding step j, the sequence of enhanced representations $[e_i a_i]$ for i from 1 to N, in other words the sequence of vectors $[e_1 a_1]$, ...., $[e_N a_N]$, is taken as input to the attention layer 220. An attention context vector $A_j$ is output from the attention layer 220 for decoding step j. The attention context vector $A_j$ is generated by taking a weighted sum of the sequence of enhanced representations $[e_i a_i]$ for i from 1 to N. The generation of the vector of weights $\alpha_j$ used in the sum for the decoding step j, which comprises a weight value $\alpha_{ji}$ corresponding to each enhanced representation $[e_i a_i]$, is described below. The attention context vector $A_j$ has the same length as the enhanced representations $[e_i a_i]_i$:

$$A_j = \sum_{i=1}^{N} \alpha_{j,i}[e_i a_i]$$

For decoding step j, the generation of the vector of attention weight vector $\alpha_j$, which has length N, will now be described. Each attention weight value $\alpha_{ji}$ in the vector of attention weights $\alpha_j$ which is generated for decoding step j is calculated from:

$$\alpha_{j,i} = \frac{exp(e_{j,i})}{\sum_{i=1}^{N} exp(e_{j,i})}$$

where

$$e_{j,i} = \omega^T \tanh\left(W s_{j-1} + V[e_i a_i] + U f_{j,i} + b\right)$$

where $s_{j-1}$ is the vector output from the LSTM block 221 in the previous decoding step, W, V and U are matrices of learned parameters, and $\omega$ and b are vectors of learned parameters. In this example, V is a 128 x (384+3) matrix, W is a 128 x 512 matrix and U is a 128 x 32 matrix. $\omega$ and b are vectors of length 128. $f_{j,i}$ is a vector, determined from:

$$acum_j = \sum_{k=1}^{j-1} \alpha_k$$

$$acat = \left[acum_j, \alpha_{j-1}\right]$$

in other words, $\alpha cat$ is formed by concatenating $\alpha cum_j$ and $\alpha_{j-1}$.

A matrix $f_j$, of dimension (N x 32) is then generated by taking $\alpha cat$ as input to a convolutional layer. $\alpha cat$ is a vector of length 2N. The convolutional layer comprises 32 filters, each having width 1 and length 31. The convolutional layer has a stride of 1 in this example. Each vector $f_{j,i}$ is extracted as the corresponding row i of the matrix.

The encoder 10, AFP 20 and decoder 30 may collectively be referred to as the acoustic model. These components form a sequence to sequence acoustic model, which takes as input a sequence of phones and outputs a sequence of spectrogram frames.

The decoder 30 outputs a spectrogram, comprising a sequence of frames $y_1$, ..., $y_M$. This is then converted to a waveform using a vocoder model 40. The vocoder is a learned model. In this example, a vocoder having a WaveNet architecture is used. A WaveNet architecture is described in "WaveNet: A generative model for raw audio", A. van den Oord er al, CoRR, vol.abs/1609.03499, 2016, the entire contents of which are incorporated by reference herein. Other vocoder models may be used however.

Various models used in the text to speech system 3 are learned models. Prior to deployment, a training process is therefore performed, in which the learned parameters are obtained. In this example, the training process comprises multiple stages.

The training process uses a corpus of data, comprising recorded speech utterances and corresponding text transcriptions. The corpus of data therefore comprises a set of audio signals comprising recorded speech and a text signal corresponding to each audio signal. These are referred to as the ground truth audio signals and the input text signals. In this example, the audio was sampled at 24000 Hz. In this example, a multi-speaker data set, comprising Mexican-Spanish speakers corresponding to approximately 38 hours of speech is used. 800 utterances are removed from the corpus to be used for validation. Each example in the training corpus comprises: the speech audio, the corresponding text, a Speaker ID, which is a one-hot vector, a Style ID which is a one-hot vector, and a Language ID, which again is a one hot vector. In this example, the Language ID is the same for all the examples in the training corpus, since all use the same language. The training corpus corresponds to multiple speakers, in this example 32 speakers (15 male and 17 female) where all of the examples corresponding to the same speaker have the same Speaker ID. Speakers in the training corpus are asked to speak their examples in different styles, such as happy, sad, angry, whispered, shouting, confused, neutral, angry etc. The Style ID is then added to each example accordingly. There are 38 styles in total in the dataset used in this example.

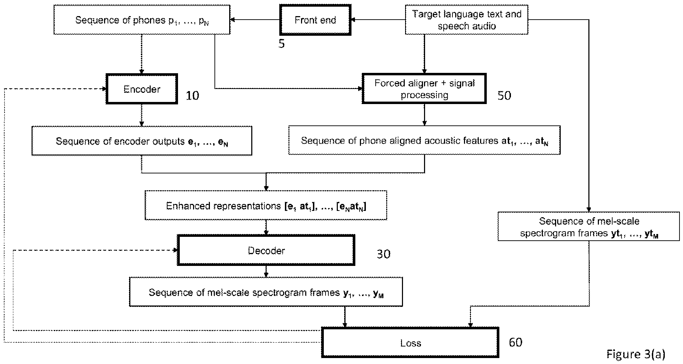

A first training stage which may be performed as part of a training method will now be described in relation to Figure 3(a). In the first training stage, parameters of the encoder 10 and the decoder 30 are learned. In this example, the training in the first training stage is performed for 200 000 iterations.

For an input text signal from the corpus corresponding to an utterance, mel spectrograms are extracted from the ground truth audio signal corresponding to the input text signal. The mel spectrograms may be extracted by framing and windowing the audio signal, applying a Fourier transform and then applying a 128 channel mel filterbank. A frame length of 50ms is used in this example, with a frame shift of 10 ms. 1025 frequencies are extracted by the Fourier transform. The sequence of mel spectrogram frames extracted from the ground truth audio signal is referred to as $yt_1$, ..., $yt_M$ - the ground truth mel spectrogram frames.

A sequence of phones is extracted from the input text signal by the front end model 5, in the same manner as described in relation to Figure 2(a). Where the front end model 5 is a learned model, training of the front end model 5 is performed separately in this example, prior to the first training stage. The learned front end model 5 is then used during the first training stage.

A sequence of phone aligned acoustic features is then extracted from the ground truth audio signal, using a forced aligner and signal processing module 50. This sequence of ground truth acoustic features is referred to as $at_1$, ..., $at_N$. As mentioned above, audio frames of length 50ms, with a frame shift of 10ms are extracted from the ground truth audio signals. These are taken as input to the module 50 - this corresponds to a sequence of M audio frames. Signal processing techniques are then used to extract acoustic features for each frame. In this example, two acoustic features are extracted for each frame - the fundamental frequency $F_0$ and the energy.

In this example, the fundamental frequency $F_0$ is extracted for an audio frame using the RAPT algorithm. The RAPT algorithm is described in "A robust algorithm for pitch tracking (RAPT)", D. Talkin, Speech Coding and Synthesis, 1995, the entire contents of which are incorporated by reference herein. The fundamental frequency of the voiced part of speech is extracted, corresponding to the peak of the frequency of the lowest harmonic of speech when the vocal cords are oscillating. A change in this fundamental frequency is perceived as a change in pitch by a listener.

The energy represents the "loudness" of the speech. The root mean squared energy may be used, corresponding to:

$$\sqrt{\frac{1}{X} \sum_{l=1}^{X} |amp_l|^2}$$

where X is the number of samples in the frame, and $amp_l$ is the audio amplitude for the sample I. In this example, the energy is extracted for an audio frame by extracting the root mean square energy using the Librosa Python library for audio and music analysis "librosa/librosa: 0.7.2".

An alignment between the sequence of audio frames 1 to M and the sequence of phones $p_1$, ..., $p_N$ is then obtained. Each audio frame in the sequence is denoted by the index m, where m runs from 1 to M. Each phone/silence in the sequence is denoted by the index i, where i runs from 1 to N. A forced aligner model is used to obtain the alignment. The forced aligner model is a learned model. Training of the forced aligner model is performed separately in this example, prior to the first training stage. In this example, the training of the forced aligner model is performed using the same training corpus as is used to train the encoder 10 and decoder 30 models, and the AFP model 20. The learned forced aligner model is then used during the first training stage. An example forced aligner model which may be used is that included in the Kaldi ASR toolkit. Other models may be used however.

A forced aligner model time aligns orthographic or phonetic text representations to audio. In this case, each frame index m is assigned to a corresponding phone/silence index i, where one or more audio frames are assigned to each phone/silence i. In other words, each phone/silence $p_i$ corresponds to a sequence of one or more frames from $m=\beta_i$ to $m=\gamma_i$. In the below, phones are referred to, but it is understood that some units of the phone sequence may correspond to silences or boundaries. For example, the first phone $p_1$ may correspond to frames 1 to 7, such that $\beta_1 =1$ and $\gamma_1 =7$, the second phone $p_2$ may correspond to frames 8 to 12, such that $\beta_2 = 8$ and $\gamma_2 =12$, and so on. The $F_0$ value for phone $p_i$ in the sequence is taken as the average of the $F_0$ values for all of the frames from $j=\beta_i$ to $j=\gamma_i$. The energy value for phone $p_i$ in the sequence is taken as the average of the energy values for all of the frames from $j=\beta_i$ to $j=\gamma_i$. The duration is determined as the number of frames the phone has been aligned to: $\gamma_i - \beta_i +1$. The duration is the length of time the phone is spoken for.

The three acoustic features corresponding to each phone may be extracted for all utterances in the corpus prior to performing the first training stage. Once extracted, the acoustic features are then standardised per speaker in the training corpus, to have zero mean and a standard deviation of 1. The three standardized acoustic features for the phone $p_i$ in the sequence are then concatenated to form the acoustic feature vector $\mathbf{at}_i$. For special tokens in the phone sequence, representing word and sentence boundaries, the value of all acoustic features is set to 0.

Thus during the first training stage, the front end model 5 takes as input a text signal, and outputs a sequence of phones $p_1$, ..., $p_N$, and the forced aligner and signal processing module 50 takes as input the audio frames and the sequence of phones, and outputs a sequence of phone aligned acoustic features $\mathbf{at_1}$, ..., $\mathbf{at_N}$. The sequence of phones is taken as input to the encoder 10 which outputs a sequence of encoder outputs $\mathbf{e_1}$, ..., $\mathbf{e_N}$ as has been described previously.

In this example, the Speaker ID, Style ID and Language ID are also taken as input to the encoder 10. Each possible Speaker ID is mapped onto an embedding, for example each Speaker ID is stored in a lookup table with the corresponding embedding. Thus each speaker in the training data set has a corresponding embedding. For each segment of speech corresponding to the same speaker, the same embedding is retrieved by the encoder 10. Similarly, each possible Language ID and each possible Style ID is mapped to a stored embedding. At the beginning of training, these stored embeddings are randomly initialised (along with the other trainable parameters). They are then updated progressively during training. As during inference, during the forward pass of the training process, the relevant stored embeddings are retrieved based on the input Speaker ID, Style ID and Language ID for the input text signal from the training corpus.

The sequence of encoder outputs $\mathbf{e_1}$, ..., $\mathbf{e_N}$ are concatenated with the sequence of ground truth acoustic features $\mathbf{at_1}$, ..., $\mathbf{at_N}$ in the same manner as described previously, and the resulting enhanced representations are taken as input to the decoder 30.

The decoder 30 outputs a sequence of mel-scale spectrogram frames $\mathbf{y_1}$, ..., $\mathbf{y_M}$ , as has been described previously. In this example, teacher forcing is used, whereby the input to the first neural network 222 for each step is the previous ground truth spectrogram frame. The mel-scale spectrogram frames $\mathbf{y_1}$, ..., $\mathbf{y_M}$ output from the decoder 30 and the ground truth mel-scale spectrogram frames $\mathbf{yt_1}$, ..., $\mathbf{yt_M}$ are then used to update the encoder and decoder parameters.

The decoder 30 and encoder 10 comprise a number of trainable parameters, which can be expressed as a vector $\theta$. The parameters include the weights for all of the neural network layers and the embeddings for the encoder inputs, including the phone embeddings, the speaker embeddings, the style embeddings and the language embeddings. The parameters are determined by assigning random values as $\theta$ initially and then updating $\theta$ sequentially by computing the gradient of a loss function $\frac{\partial L}{\partial \theta}$, and updating $\theta$ using the computed gradient and an optimiser function. The loss function is given by:

$$L = L_1 + \sigma L_2$$

where $\sigma$ is the learning rate. In this example, $\sigma$ is a constant, the value of which is a hyperparameter, in this example set to 0.001. $L_1$ is given by:

$$L_1 = L_3 + L_4$$

where $L_3$ is given by:

$$L_3 = \frac{1}{J} \sum_{p=1}^{P} \sum_{m_p=1}^{M_p} \left| yt_{p,m_p} - y_{p,m_p} \right|$$

where

$$J = \sum_{p=1}^{P} M_p$$

where P is a number of example utterances from the training corpus (the batch size), where the value of P is a hyperparameter. $M_p$ is the total number of frames in the audio signal for example p. $y_{p,m_p}$ is the output of the decoder model 30 for the frame m of the example p. $yt_{p,m_p}$ is the ground truth mel spectrogram frame m of the example p.

$L_4$ is given by:

$$L_4 = \frac{1}{J} \sum_{p=1}^{P} \sum_{m_p=1}^{M_p} \left| yt_{p,m_p} - ypre_{p,m_p} \right|$$

where $ypre_{p,m_p}$ is the output of the first fully connected layer 224 for the frame m of the example p. The $L_3$ and $L_4$ loss functions correspond to the sum of the absolute differences between the true value and the predicted value.

The loss $L_2$ is given by:

$$L_2 = \frac{1}{J} \sum_{p=1}^{P} \sum_{j_p=1}^{M_p} vt_{p,j_p} log v_{p,j_p} + \left(1 - vt_{p,j_p}\right) log \left(1 - v_{p,j_p}\right)$$

where $vt_{p,j_p}$ is the ground truth stop variable for the decoding step j for example p - this variable is equal to 1 when $j_p = M_p/4$ and is equal to 0 when $j_p$ is less than $M_p/4$. $v_{p,j_p}$ is the output of the second fully connected layer 223 for the decoding step j for example p. The $L_2$ loss function is a binary cross-entropy loss.

The gradient of the loss L with respect to each of the trainable parameters of the model is determined through back-propagation. The gradients are then used to determine the updated parameters, using an optimiser function. This family of update methods is known as gradient descent (GD), generally defined iteratively as:

$$\theta = \theta - \mu \frac{\partial L}{\partial \theta}$$

where $\mu$ is the learning rate, which defines how quickly the parameters are updated. An Adam optimization algorithm is used in this example. The maximum norm of the gradient is clipped to be 1.0, and a weight decay of $1\times10^{-6}$ is used, in order to regularise. An initial learning rate of 0.001 is used.

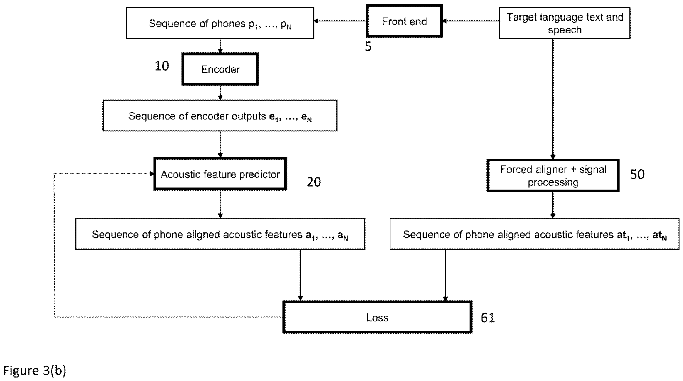

Once the encoder 10 and decoder 30 are trained, a second training stage is performed. An example of the method performed during the second training stage will now be described in relation to Figure 3(b). During the second training stage, the acoustic feature predictor model 20 is trained.

The same training corpus as used for the first training stage may be used in the second training stage. The sequence of ground truth phone aligned acoustic features $\mathbf{at_1}$, ..., $\mathbf{at_N}$ generated in the first training stage by the forced aligner and signal processing module 50 are used during the second training stage. For an example p in the corpus, comprising a text signal and a corresponding audio signal from which the ground truth acoustic features have been extracted, the text signal is taken as input to the front end model 5, and the extracted sequence of phones is then taken as input to the encoder module 10, generating the sequence of encoder outputs as described previously. The sequence of encoder outputs is taken as input to the acoustic feature predictor model 20, which generates a sequence of phone aligned acoustic features $\mathbf{a_1}$, ..., $\mathbf{a_N}$ in the same manner as described previously, where each acoustic feature $\mathbf{a_i}$ is a 3 dimensional vector. Teacher forcing may be used, where each vector $\mathbf{E_i}$ is concatenated with the previous nl ground truth acoustic feature vectors $\mathbf{at_{i-1}}$ to $\mathbf{at_{i-nl}}$ before being input to the second LSTM block 205.

The acoustic feature predictor comprises a number of trainable parameters, which can be expressed as a vector $\theta_{\mathbf{AFP}}$. The parameters include the weights for all of the neural network layers in the AFP 20. The parameters are determined by assigning random values as $\theta_{\mathbf{AFP}}$ initially and then updating $\theta_{\mathbf{AFP}}$ sequentially by computing the gradient of a loss function $\frac{\partial L_{AFP}}{\partial \theta_{AFP}}$ and updating $\theta_{\mathbf{AFP}}$ using the computed gradient and an optimiser function. An L1 loss function is used. The loss function is given by:

$$L_{AFP} = \frac{1}{I} \sum_{p=1}^{P} \sum_{i_p=1}^{N_p} \sum_{d=1}^{3} \left| at_{p,i_p}^{(d)} - a_{p,i_p}^{(d)} \right|$$

where

$$I = \sum_{p=1}^{P} N_p$$

where $at_{p,i_p}^{(d)}$ is the dth entry of the ground truth acoustic feature vector for the ith phone of the pth example from the corpus, and $a_{p,i_p}^{(d)}$ is the dth entry of the acoustic feature vector output from the acoustic feature predictor 20 for the ith phone of the pth example. $N_p$ is the total number of phones in the sequence for example p.

The gradient of the loss L with respect to each of the trainable parameters of the model is determined through back-propagation. The gradients are then used to determine the updated parameters, using an optimiser function. This family of update methods is known as gradient descent (GD), generally defined iteratively as:

$$\theta = \theta - \mu \frac{\partial L}{\partial \theta}$$

where $\mu$ is the learning rate, which defines how quickly the parameters are updated. An Adam optimization algorithm is used in this example.

In the second stage of training in this example, the encoder parameters are frozen and the AFP parameters are learned for 400 000 iterations.

A third training phase may then be performed, in which the vocoder 40 is trained. The vocoder is trained taking the outputs from the trained decoder 30 as inputs, and using the ground truth audio signals from the corpus.

The TTS model 3 is a neural network based model. The generated speech is conditioned on acoustic features for each phone and silence. In this example, the TTS model 3 is trained on many speakers, using Speaker IDs on input to the TTS model 3. In other examples, the TTS model 3 may be trained on many speakers and languages simultaneously, using Speaker IDs and Language IDs on input to the TTS model 3. In this example, the TTS model 3 is conditioned using acoustic features by using signal processing techniques to extract the $F_0$, energy and duration of each phone and silence (where appropriate) for the training data used to train the TTS model 3. These are then used as inputs in training stage 1 to condition the generated speech. This allows to pass the acoustic features as inputs in inference, along with the phones to utter. The TTS model 3 then generates speech with these features. During inference, the AFP 20 predicts the acoustic features from the text, Speaker ID and Language ID information taken as input to the TTS model 3. In this example, the AFP 20 comprises an RNN that takes the encoder outputs as input. Other types of models may be used in other examples however. The AFP 20 is a model that is trained to predict the acoustic features from the translated text during inference time.

Although in the above, an example TTS model 3 is described, various different TTS models can be used. The TTS model 3 may take as input a sequence of phones (including silences as described above). The TTS model 3 may comprise an acoustic model comprising a first part, that generates phone representations using learned parameters. The first part is referred to as the encoder 10 above. The learned parameters may be the phone representations themselves, or the parameters of a neural network model for example. The phone aligned acoustic features generated by the AFP 20 are then concatenated with the respective phone representations to form enhanced phone representations as described above. The acoustic model may comprise a second part that generates spectrogram frames (referred to as the decoder 30 above), such that the TTS model 3 comprises a sequence-to-sequence neural network. The enhanced phone representations are taken as input to the second part.

Various different encoder and/or decoder structures are possible. An alternative TTS model is described in "FastSpeech: Fast, Robust and Controllable Text to Speech", Ren et al, arXiv:1905.09263 for example. This TTS model represents an input sequence of phones with a set of phoneme embeddings, which are 384 length vectors. The phone aligned acoustic features generated by an acoustic feature predictor model 21 as described above may be concatenated to the respective phoneme embeddings, together with the Speaker ID, and optionally the Style ID and Language ID as described previously for example.

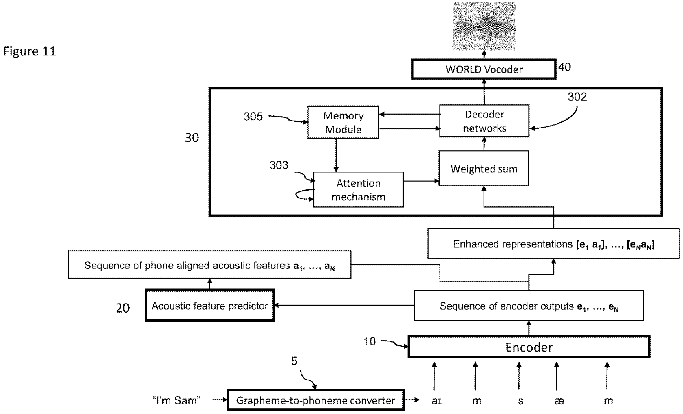

Figure 11 shows a schematic illustration of an alternative TTS model 3 according to an example. In this example, a text signal "I'm Sam" is inputted. The TTS model 3 comprises a grapheme-to-phoneme converter 5, which is an example of a front end model. The grapheme-to-phoneme converter 5 is configured to convert the text input, comprising a sequence of one or more words, into a sequence of phonetic units, for example units in the International Phonetic Alphabet. The grapheme-to-phoneme converter 5 in this example comprises a rule based algorithm. For the example text signal, there results a sequence of five phonetic units: aɪ, m, s, æ, m, in this example.

An encoder 10 then converts the sequence of phonetic units to a sequence of representational vectors. The encoder 10 may comprise a look-up table for each phonetic unit and its corresponding embedding vector, a recurrent neural network, a convolutional neural network, or a combination of the above for example. In one example, the encoder 10 comprises a look-up table, where each phonetic unit is assigned a unique numerical integer corresponding to a row in the look-up table. The look up table comprises a 2D matrix, where the number of rows is the total number of possible phonetic units and the number of columns is the length of the representational vectors. The values in the 2D matrix are learnt automatically during a training stage, and stored for use during deployment. The representational vector corresponding to an input phonetic unit is a vector of the values in the corresponding row. There is a one to one correspondence between the phonetic unit and the representational vector, thus where five phonetic units are inputted, five representational vectors are outputted, as shown in the figure. In an alternative example, the encoder 10 comprises the look-up table, and the sequence of vectors produced from the look-up table are then be fed into a recurrent neural network. Thus the sequence of vectors corresponding to the text signal segment and produced from the look-up table are fed into a recurrent neural network (for example rolling in a left-to-right direction, vice versa, or both) where the output of the recurrent neural network is then used as the sequence of representational vectors. The output sequence is of the same length as that output from the look-up table (thus in this example, five representational vectors). In another example, the encoder 10 may comprise the look-up table and a convolutional neural network, which convolves across the sequence of vectors output from the look-up table to produce a new sequence of vectors. In both cases, the vector of each phone unit is transformed whilst taking account of the surrounding phones around that phone unit, which may increase performance.

As described previously, the encoder model 10 may take one or more additional inputs, such as a Speaker ID. Any additional representations are concatenated to each representational vector in the sequence, to form the final encoder output sequence $e_1$ to $e_N$. The sequence of encoder outputs $e_1$ to $e_N$ is taken as input to an acoustic feature predictor (AFP) model 20 in the TTS 3, as described previously. The AFP model 20 may be an AFP model as described in relation to Figure 2(c) above. Each vector in the sequence of phone aligned acoustic features $a_1$ to $a_N$ generated by the AFP 20 is then concatenated to the corresponding vector in the sequence of encoder outputs $e_1$ to $e_N$ to form a sequence of enhanced representations $[e_1a_1]$, ...., $[e_Na_N]$. This sequence of enhanced representations is then taken as input to the decoder 30. Each enhanced representation is a vector of length T. For example, T may be 512.

The decoder 30 comprises an attention mechanism module 303. The attention mechanism 303 may comprise a feed-forward neural network, a recurrent neural network, or a combination of both for example. The attention mechanism 303 allows for a many-to-many mapping of lengths from the input to the output.

In the described example, the attention mechanism 303 uses the attention vector itself (i.e. the vector output from the attention mechanism 303 in the previous step, which is cached for use in the next step), and the memory state (i.e. the current sequence of memory vectors stored in the memory module 305, described later).

The decoder networks 302 comprises two neural networks, a first decoder neural network for writing in to the memory module 305, and a second decoder neural network for reading out from the memory module 305. The first decoder neural network takes as input a weighted sum of the enhanced representations (with the weights generated using the attention vector output from the attention module 303). The first decoder neural network 302 outputs to the memory mechanism 305. The second decoder neural network takes as input the current memory vectors in the memory mechanism 305, and outputs a frame to the vocoder 40. The process is repeated, for each output of the attention mechanism module, to generate a sequence of frames. The frames output to the vocoder 40 are WORLD feature vectors. The sequence of frames are converted into audio using the audio waveform synthesis module, i.e. a vocoder 40. The WORLD vocoder 40 comprises a deterministic algorithm that converts WORLD feature vectors into speech. Although a WORLD vocoder is shown, optionally, a convolutional neural network, such as Wavenet, may be used in place of the WORLD vocoder for example.

The memory mechanism 305 may be a "First-In-First-Out" memory, which comprises S slots, referred to as the memory vectors, of dimension R. In this example, S = 20 and R = 512. These correspond to the information passed from the decoder networks 302 at each step. At each step, the memory module 305 shifts right by one, such that the last memory vector at position S is deleted, while a new memory vector is written into position 1. The memory module 305 is initialised with zeros at the beginning of operation. The operation of the attention mechanism 303, the memory module 305 and the decoder 302 is explained in further detail below.

In this example, for each output frame of second (WORLD) feature vectors (up to a maximum number of frames), the attention mechanism 303 takes in the attention state vector itself (the vector output from the attention mechanism 303 in the previous step) and the memory state (i.e. the current sequence of vectors stored in the memory) to generate an output attention vector. In this step, a 1D vector comprising the previous attention vector (of length T), concatenated with the memory state (which comprises the information from all S memory vectors stored in the memory, flattened to an S*R length 1D vector) is fed into the attention mechanism 303, to generate an attention vector of length T. The attention mechanism 303 uses the attention state itself, and the memory state. The input is a 1D vector, having a length corresponding to {(S*R) + T} in this case. The output is a 1D attention vector, having a length T. The attention mechanism 303 may comprise a feed-forward neural network, with 2 layers of T units each, for example, which produces an attention vector of the same size T as the enhanced representations. The attention mechanism module 303 thus outputs an attention vector.

The maximum number of frames is determined for each input segment of speech signal. For example, it may be determined as a multiple of the number of phone units in the segment, for example 20x the number of phone units.

A weighted sum of the enhanced representations $[e_1a_1]$, ...., $[e_Na_N]$ is then taken. The dot product of the attention vector (of length T) with each enhanced representation (each of length T) is taken, which gives a sequence of scalars (one number corresponding to each enhanced representation). These are used as the weights. Each enhanced representation is then multiplied by its corresponding weight, and the resulting weighted vectors (each of length T) are summed. The result of this is fed into the first decoder neural network. In this step the attention vector is multiplied with the enhanced representations twice, once to generate the weights, and a second time to generate the weighted combination.

As described above, the decoder networks module 302 comprises two neural networks, a first decoder neural network for writing in to the memory module 305, and a second decoder neural network for reading out from the memory module 305.

The first decoder neural network takes in the output from the weighted sum (a vector of length T). The first decoder neural network outputs a vector of length R. The output vector of length R is written into the memory module 305. At each decoding step, the current output vector of length R is written in at position 1 and the last vector at position S is deleted in the memory. The first decoder neural network may for example have 1 layer, with R units.

The second decoder neural network, which for example may have 1 layer with the same number of units as the output, e.g. WORLD feature vector (for example 67 units corresponding to the 67 dimensions in a WORLD feature vector) then reads from the entire memory module, which is flattened to a S*R length 1D vector, to produce an output WORLD feature vector corresponding to one frame. The second decoder neural network thus takes as input a 1D vector of length (S*R). The second decoder neural network outputs a 1D vector of length equal to the length of the second feature vector (e.g. the WORLD vector).

It is then determined whether a maximum number of frames has been reached. If not, the attention mechanism 303 generates the next feature vector. The attention mechanism takes as input the same enhanced representations, the updated attention state and the updated memory state. The process repeats again until a maximum number of frames has been reached. The WORLD feature vectors may then be converted into speech using the WORLD Vocoder 301 in S308.

The memory module 305 is an optional component of the TTS system 3. For example, the combination of the decoder networks 302 and the memory module 305 can be replaced by a single left-to-right recurrent neural network (single or multi-layered). Furthermore, it is possible to replace the First-In-First-Out memory module with a read-write memory module where, at every step, the read and write instructions are determined by a neural network for example.

Figure 4(a) is a schematic illustration of a speech processing system according to an example. The system performs spoken language translation. The system comprises a speech recognition module 1 which generates source language text from the source language speech, a text to text translation module 2 which generates target language text from the source language text, and a speech synthesis module 3 which generates the target language speech from the target language text. The speech recognition module 1, text to text translation module 2 and TTS module 3 may be those described in relation to the previous figures for example.

In this example, the system is used to perform spoken language translation for a quantity of source language audio corresponding to a third voice, which is referred to here as Voice C. The third voice corresponds to the voice of a third speaker, speaker C. For example, an audio file comprising a number of utterances spoken in Voice C may be received to be processed. The audio file may comprise additional utterances spoken in one or more different voices. The audio file is split into utterances, where each utterance is then processed by the system one at a time.

In this example, and as has been described previously, the speech synthesis module 3 comprises an encoder model 10. The encoder model 10 takes an input indicating a speaker, from a set of possible speakers. This input is referred to as a Speaker ID. Each Speaker ID in the set of possible Speaker IDs corresponds to a speaker whose recorded speech was in the training corpus used to train the speech synthesis model 3. These speakers will be referred to as "training speakers" throughout. During deployment (also referred to here as inference), one or more new speakers may speak the source language speech which is taken as input to the speech processing system. Each new speaker is assigned a Speaker ID from the set of existing Speaker IDs. The new speaker is assigned a Speaker ID which corresponds to a training speaker who is similar to the new speaker. This may be done by a user of the system, or it may be done automatically, for example by a trained model which selects a training speaker having one or more similar characteristics to the new speaker. For input utterances corresponding to the new speaker, the assigned Speaker ID is taken as input to the encoder 10.

In this example, we will describe how the input source language speech utterances which correspond to the third voice, Voice C, are processed by the speech processing system. For these utterances, a first Speaker ID is assigned, and taken as input to the encoder 10 in the TTS model 3. The first Speaker ID corresponds to a first training speaker, speaker A. Audio data corresponding to utterances spoken by the first training speaker were used to train the TTS model 3 during the training stage. The training corpus therefore comprised audio data corresponding to the first training speaker. The first training speaker has a first voice, referred to here as Voice A. The training corpus may have also comprised audio data corresponding to other training speakers. As mentioned, the first Speaker ID may be selected manually by a user as the Speaker ID most appropriate to the third speaker C. For example, the first time that a source language speech utterance is inputted corresponding to Voice C, the first Speaker ID is selected as a voice which has similar characteristics to Voice C. The first speaker A may be a different person to the third speaker C, or the same person to the third speaker C (if speaker C was one of the speakers in the training corpus). Alternatively, the first Speaker ID may have been selected automatically, for example by a trained classifier model which takes the source language speech as input. As has been described previously, during processing of a speech utterance corresponding to the third speaker having Voice C, the first Speaker ID is taken as input to the encoder model 10 in the speech synthesis model 3 and mapped to a learned embedding. The speech audio generated by the speech synthesis model 3 is then generated having characteristics corresponding to the first Voice A.

The input utterance is initially processed in the same manner as has been described in relation to Figure 1 above. A first speech utterance corresponding to speech spoken in a second language (source language) by the third speaker Voice C is received. The speech recognition module 1 generates first text data from the first speech, the first text data corresponding to text in the second language (source language). A text to text translation module 2 is then used to generate target language text from the source language text. In this step, second text data is generated from the first text data, the second text data corresponding to text in the first language.

The default setting for the speech processing system is then to use the speech synthesis module 3 to generate target language audio using acoustic features generated from the target language text using an acoustic feature predictor such as has been described in relation to Figure 2(a).

However, as has been explained previously, for some utterances, the output speech generated in this manner does not have a natural sound. In this example, utterances for which the output audio speech has a less natural sound are identified and selected manually by a user.

For these utterances, an audio signal corresponding to the target language text is obtained. This may be obtained by the user speaking the target language text through a microphone, by the user selecting a stored audio file corresponding to the target language text, or by the system automatically selecting a stored audio file corresponding to the target language text for example. A second input audio signal is thus obtained, comprising the target language text spoken in a second voice, Voice B, corresponding to a second speaker, Speaker B. Speaker B may be the user or a voice actor for example. Second Voice B is different to first Voice A which was used to train the TTS model 3. Second Voice B in this example is also different to the third Voice, Voice C. In some examples, the second audio signal may comprise only speech, in other words the signal may be have been processed or recorded in such a way that only speech noise is included.

Responsive to obtaining the second speech signal corresponding to the second text (target language text) spoken in the first language and in a second voice (Voice B), a forced aligner and signal processing module 50 extracts acoustic data from the second speech signal. The forced aligner and signal processing module 50 extracts a set of one or more acoustic features for each unit (e.g. phone, silence or boundary) in the target language text. In this example, the forced aligner and signal processing module 50 extracts a fundamental frequency value $F_0$ , an energy value, and a duration value, for each unit. The acoustic features are extracted from the second input audio signal in the same manner as the ground truth acoustic features are extracted from the ground truth input audio as described in relation to Figure 3(a) above. A set of phone aligned acoustic features $\mathbf{a_{B1}}$, .... $\mathbf{a_{BN}}$ is extracted using the forced aligner and signal processing module 50, corresponding to the second speaker, Speaker B. Each acoustic feature vector $\mathbf{a_{Bi}}$ in the sequence is a 3 dimensional vector, comprising a fundamental frequency, an energy and a duration corresponding to the phone unit i. The set of phone aligned acoustic features $\mathbf{a_{B1}}$, .... $\mathbf{a_{BN}}$ is also referred to here as the second speaker acoustic data, or Voice B acoustic data.

The voice B acoustic data is then taken as input to a re-scaler module 35. The re-scaler module 35 is configured to modify the acoustic data based on stored acoustic data characteristics of the first voice, Voice A, which was used to train the TTS model 3. In this step, each of the fundamental frequency and energy values are re-scaled, based on stored statistical values corresponding to the first voice, Voice A. In particular, a mean fundamental frequency value $F_{0A}$ and a standard deviation for the fundamental frequency $\sigma_{F0A}$, and a mean energy value $E_A$ and a standard deviation for the energy $\sigma_{EA}$ are stored for the first speaker A. The mean fundamental frequency value $F_{0B}$ and standard deviation for the fundamental frequency $\sigma_{F0B}$ from the second speaker B acoustic data are then calculated. The mean fundamental frequency value from the second speaker acoustic data $F_{0B}$ is then subtracted from each fundamental frequency value in the second speaker acoustic data $F_{0Bi}$. Each result is then divided by the standard deviation for the second speaker $\sigma_{F0B}$ and multiplied by the standard deviation for the first speaker $\sigma_{F0A}$. The mean fundamental frequency value for the first speaker $F_{0A}$ is then added to each result, giving each resulting modified acoustic feature:

$$F_{0Ai} = \sigma_{F_0A}\left(\frac{F_{0Bi} - \bar{F}_{0B}}{\sigma_{F_0B}}\right) + \bar{F}_{0A}$$

Similarly, the mean energy value $E_B$ and standard deviation for the energy $\sigma_{EB}$ from the second speaker acoustic data is calculated. The mean energy value from the second speaker acoustic data $E_B$ is then subtracted from each energy value in the second speaker acoustic data $E_{Bi}$. Each result is then divided by the standard deviation for the second speaker $\sigma_{EB}$ and multiplied by the standard deviation for the first speaker $\sigma_{EA}$.

The mean energy value for the first speaker $E_A$ is then added to each result, giving each resulting modified acoustic feature:

$$E_{Ai} = \sigma_{EA}\left(\frac{E_{Bi} - \bar{E}_B}{\sigma_{EB}}\right) + \bar{E}_A$$

The duration values are not modified by the re-scaling module 35.

A set of modified phone aligned acoustic features $\mathbf{a_{A1}}$, .... $\mathbf{a_{AN}}$ is output by the re-scaling module 35, also referred to here as the modified acoustic data, or Voice A acoustic data. Each modified acoustic feature vector $\mathbf{a_{Ai}}$ in the sequence is a 3 dimensional vector, comprising a modified fundamental frequency, a modified energy and the extracted duration corresponding to the phone i. By re-scaling the fundamental frequency and the energy, what is fed into the TTS model 3 retains the "between phone" variation in how to say the text. However, characteristics of the second speaker B are re-scaled so that the output speech sounds more like the first speaker A.

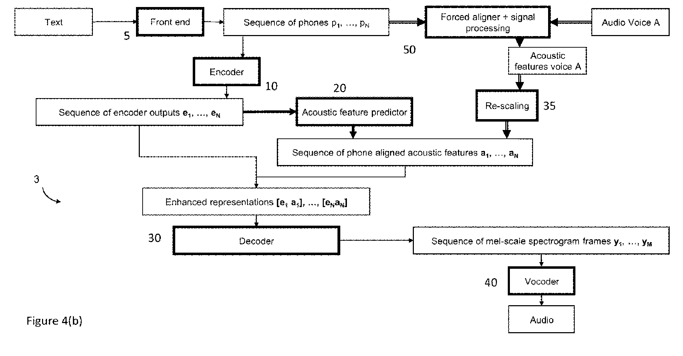

As shown in Figure 4(b), the output speech signal is then generated using the text to speech model 3 in the same manner as described previously, taking the second text data as input and using the modified acoustic data. In other words, the sequence of modified phone aligned acoustic features $a_{A1}$, .... $a_{AN}$ output from the re-scaler 35 are concatenated with the sequence of encoder outputs $e_1$, .... $e_N$, instead of a sequence of phone aligned acoustic features output from the acoustic feature predictor 20. An output speech signal is generated corresponding to the second text spoken in the first language.

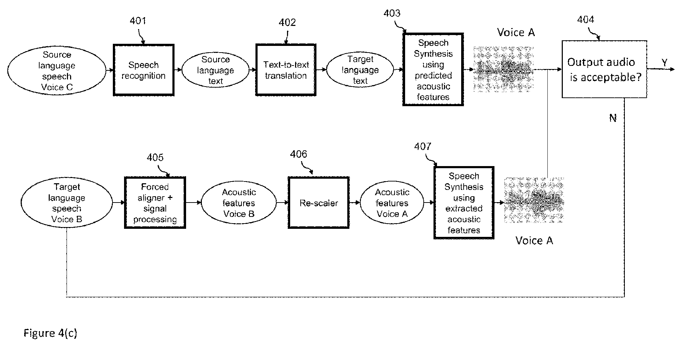

As shown in Figure 4(b), the TTS model 3 therefore has two possible modes of operation. In a first mode, indicated by the thicker arrows in the figure, a sequence of phone aligned acoustic features are generated by a trained acoustic feature predictor model 20 from the sequence of encoder outputs, in the same manner as described in relation to Figure 2(a) above. In a second mode, indicated by the double arrows, a sequence of modified phone aligned acoustic features are generated, using a forced aligner and signal processing module 50 and a re-scaling module 35, from a second input audio signal. For each input utterance, the user may select which mode of operation is used. This selection may be based on availability of a second input for example. Alternatively, the first mode may be used initially for all input utterances, with the user selecting the second mode for utterances where the speech output by the first mode is deemed to be of insufficient quality. An example of a method performed using this approach is described in relation to Figure 4(c). Alternatively, the system may automatically select between the first mode and the second mode based on availability of a second input for example, or based on a different criteria.

Figure 4(c) shows an example method which may be performed using the system described in relation to Figures 4(a) and (b). In step 401, a first speech signal corresponding to speech spoken in a second language (source language) is received, and first text data is generated from the first speech signal, the first text data corresponding to text in the second language. A text to text translation step 402 is then performed, to generate second text data from the first text data, the second text data corresponding to text in a first language (target language).

In 403, an output speech signal is generated using a text to speech synthesis model taking the second text data as input and using second acoustic data. The output speech signal corresponds to the second text spoken in the first language (target language). The second acoustic data is generated using an acoustic feature predictor model 20, taking the second text data as input. This corresponds to the first mode described in relation to Figure 4(b).

The generated audio is then assessed in 404. The step may involve a manual assessment by a user for example. If the output audio is not deemed to be acceptable, then the method obtains a second speech signal corresponding to the second text spoken in the first language and in a second voice.

Responsive to obtaining a second speech signal corresponding to the second text spoken in the first language and in a second voice, in step 405, first acoustic data is extracted from the second speech signal. In step 406, the acoustic data is modified based on stored acoustic data characteristics corresponding to a first voice. In step 407, a further output speech signal is generated using a text to speech synthesis model taking the second text data as input and using the modified first acoustic data, the output speech signal corresponding to the second text spoken in the first language. This corresponds to the second mode of operation described in relation to Figure 4(b).

The method then returns to step 404, where the further output speech signal is assessed. If the output audio is not deemed to be acceptable, then the method obtains a further speech signal corresponding to the second text spoken in the first language and in a second voice. The further output audio may be deemed not acceptable in cases when the forced aligner fails for example. In such a case, the second speaker re-records the audio, and the steps 405 to 407 are performed again. The system may iterate steps 404 to 407 until an acceptable output audio is obtained, or for a maximum number of iterations for example. An example maximum number of iterations is 2.

The text to speech model 3 is trained in the same manner as described previously in relation to Figures 3(a) and 3(b). In some examples, the forced aligner model 50 is also trained using data corresponding to the second speaker, speaker B. Data corresponding to speaker B may be included in the training corpus used to train the TTS model 3 (i.e. in addition to data corresponding to the first speaker, speaker A). Alternatively, data corresponding to speaker B may be used only to train the forced aligner model. Alternatively, no data corresponding to speaker B is used to train the forced aligner model. The data used to train the forced aligner model may comprise data recorded in a corresponding manner to the data which will be used in inference. For example, if the second input audio signal is to be recorded using a USB microphone, some training data in the training dataset used to train the forced aligner may be recorded in the same manner. As additional data corresponding to the second speaker, speaker B is received, the forced aligner model can be continuously trained. In this example, the forced aligner is trained using at least 5-10 speakers, with 1-2 hours of data per speaker.

Furthermore, during the training stage, for one or more speakers in the training corpus used to train the TTS model 3, a mean and standard deviation is taken from all of the phone aligned fundamental frequency values extracted by the forced aligner and signal processing module 50, and a mean and standard deviation is taken from all the phone aligned energy values extracted by the forced aligner and signal processing module 50. For each of these speakers, a mean fundamental frequency value, standard deviation of the fundamental frequency, mean energy value and standard deviation of the energy are then stored. These correspond to stored acoustic data characteristics corresponding to each speaker in the training dataset used to train the TTS model 3.

Using the TTS model 3 described in relation to Figure 4, for a few key sentences voice actors can be used to record how the target sentence should sound, for example. The acoustic features can then be extracted from these recordings, and used as the input acoustic features in the TTS model 3. Speaker leakage, where the generated speech sounds like the new input recording, is mitigated by re-scaling the extracted acoustic features during inference.

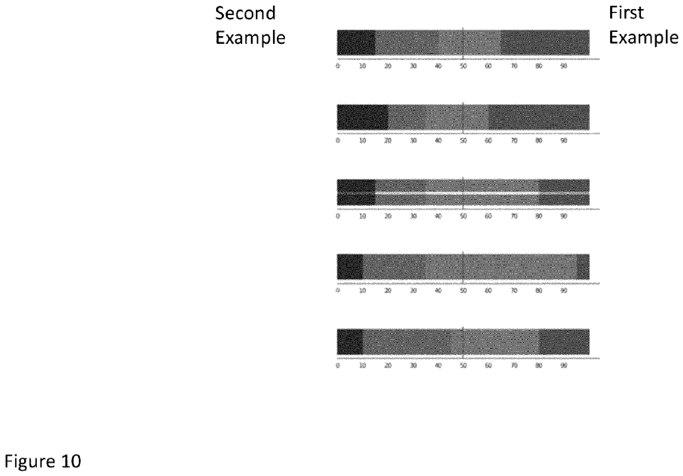

Figure 10 shows the results of a preference test on a subsection of test data. The left hand side corresponds to test results for speech generated using a text to speech model operating in a first mode as described in relation to Figure 4(b) - this is referred to as the second example. The speech is generated using an AFP model 20, which takes the encoder outputs as input. The right hand side corresponds to test results for speech generated using a text to speech model as described in relation to Figure 4(b) and operating in the second mode - this is referred to as the first example. The speech is generated by obtaining a second speech signal spoken in a second voice. Acoustic data is extracted from the second speech signal and modified based on stored acoustic data characteristics corresponding to the first voice. The TTS model 3 then generates the output speech signal taking the text data as input and using the modified first acoustic data.

The test samples used are very expressive samples, where using the TTS model of the second example produced a very flat prosody. The dark colours represent a strong preference and the light colours represent a slight preference.

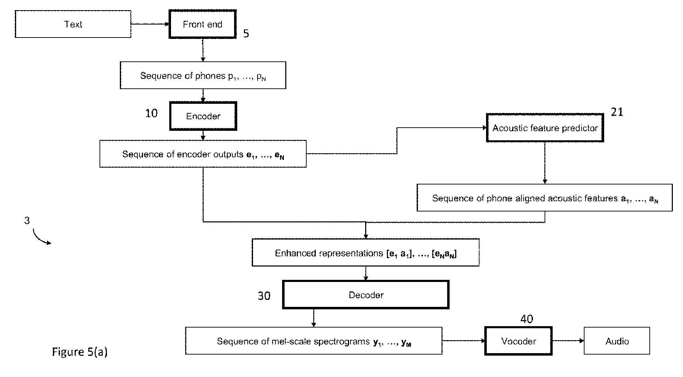

Figure 5(a) is a schematic illustration of a text to speech module 3 which may be used in a system according to an example. In one example, the text to speech module 3 may be used in a speech processing system as described in relation to Figure 1. In another example, the text to speech module 3 may be used in a speech processing system as described in relation to Figure 4(a). The processing performed by the text to speech module 3 during inference, or deployment, will now be described in relation to Figure 5(a).

At inference time, the AFP model 21 predicts parameters of a probability distribution. The acoustic features are then sampled from this distribution. This mitigates against monotonicity of the generated speech, by adding variability which adds a sense of naturalness. In this example, parameters of a probability distribution are predicted for the acoustic features for each phone. In examples where the TTS model described in relation to Figure 5(a) is used in the system described in relation to Figure 4, the sampling procedure used in the TTS model 3 means that the generated speech has the natural variability of human speech - this reduces the need to intervene with use of a second audio input corresponding to a second speaker, Speaker B.

The text to speech module 3 takes as input a text signal and generates a sequence of phones using a front end model 5 as described in relation to Figure 2(a). The sequence of phones is then taken as input to an encoder 10, which generates a sequence of encoder outputs $e_1$ to $e_N$ as described in relation to Figure 2(a). The sequence of encoder outputs $e_1$ to $e_N$ is taken as input to an acoustic feature predictor 21 in this example. In some other examples, an intermediate sequence is taken from the encoder 10 and inputted to the AFP 21. For example, the output of the set of convolutional layers 201 may be taken as input to the AFP 21.

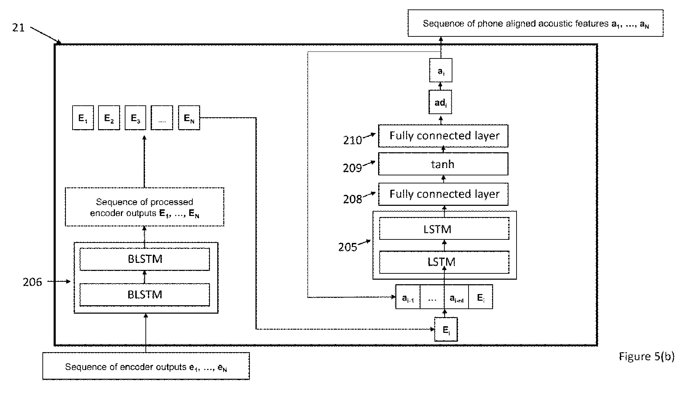

The acoustic feature predictor 21 is a learned model. In this example, the AFP 21 is an autoregressive model, where the previous nl predicted acoustic features are used to predict each acoustic feature in the sequence. In other examples however, non-autoregressive models may be used. Figure 5(b) shows a schematic illustration of an AFP 21 according to an example. The AFP 21 comprises a first stacked LSTM block 206, comprising two layers of bidirectional LSTMs. Such an LSTM block 206 has been described previously. The encoder outputs $e_1$ to $e_N$ are taken in sequence as input to the first stacked LSTM block 206, and are mapped to a sequence of N 64-dimensional vectors, $E_1, ..., E_N$. The AFP 21 further comprises a second stacked LSTM block 205, comprising two layers of unidirectional LSTMs.

The sequence of N vectors , $E_1, ..., E_N$ output from the first LSTM block 206 are taken in sequence as input to the second stacked LSTM block 205. Each input vector $E_i$ is concatenated with the previous nl acoustic feature vectors $a_{i-1}$ to $a_{i-nl}$, where nl is an integer value. In this example, nl is 5. The second LSTM block 205 outputs a 32-dimensional vector for the input $E_i$. The output vector from the second LSTM block 205 is taken as input to a fully connected neural network layer 208, where the output of the fully connected layer 208 for each input vector is a 16 dimensional vector. A tanh function is applied, followed by a fully connected layer comprising 6 neurons. The output of the fully connected layer 201, the vector $ad_i$ , is a predicted set of probability distribution parameters for each acoustic feature corresponding to the phone i. The acoustic feature vector $a_i$ , is then generated from the probability distribution parameters $ad_i$ . This is combined with the input to the second LSTM block 205 for the next time step.

The AFP 21 in this example therefore generates a sequence of phone aligned vectors $ad_1$ to $ad_N$, each vector $ad_i$ corresponding to a set of probability distribution parameters for each acoustic feature $a^{(1)}$ to $a^{(3)}$, where $a^{(1)}$ corresponds to the fundamental frequency $F_0$, $a^{(2)}$ corresponds to the energy and $a^{(3)}$ corresponds to the duration. In this example, each vector $ad_i$ comprises a first value, which corresponds to a mean for $a^{(1)}$, a second value which corresponds to a log variance for $a^{(1)}$, a third value which corresponds to a mean for $a^{(2)}$, a fourth value which corresponds to a log variance for $a^{(2)}$, a fifth value which corresponds to a mean for $a^{(3)}$, and a sixth value which corresponds to a log variance for $a^{(3)}$. Each vector therefore comprises a set of parameters defining a Gaussian probability distribution for each acoustic feature in this example. However, in other examples, a set of parameters defining a different probability distribution for each acoustic feature may be used.

For each phone in the sequence, an acoustic feature vector $a_i$ is then generated by drawing samples from the probability distributions defined by the vector $\mathbf{ad_i}$. The acoustic feature vector $\mathbf{a_i}$ is a three dimensional vector, comprising a value corresponding to the fundamental frequency, a value corresponding to the energy and a value corresponding to the duration. The value of the fundamental frequency for phone i in the sequence is drawn randomly from the distribution defined by the first and second values in vector $\mathbf{ad_i}$. The value of the energy for phone i in the sequence is drawn randomly from the distribution defined by the third and fourth values in vector $\mathbf{ad_i}$. The value of the duration for phone i in the sequence is drawn randomly from the distribution defined by the fifth and sixth values in vector $\mathbf{ad_i}$. A random sample may be drawn from the probability distribution by first drawing a random value from a standard normal distribution, in other words a normal distribution having mean 0 and standard deviation 1. The resulting value is then multiplied by a standard deviation value derived from $\mathbf{ad_i}$ and the mean from $\mathbf{ad_i}$ is then added. This is the equivalent of drawing a random value from a Gaussian with the mean and standard deviation values derived from $\mathbf{ad_i}$. Various methods of drawing a random value from a standard normal distribution are known, for example, a Box-Muller method may be used. The acoustic feature vectors $\mathbf{a_i}$ are then used in the TTS system 3 in the same manner as has been described previously in relation to Figure 2(a).

In this example, the AFP 21 outputs one or more parameters representing a probability distribution for one or more of the features in the acoustic feature vector, and the acoustic feature vector is generated using the probability distribution. The AFP 21 thus outputs parameters of a probability distribution, instead of a fixed acoustic feature vector, where the parameters of the distribution are learned during the second training stage, and these parameters are used as the training targets for training the AFP 21. The output of the AFP 21 is a 6 dimensional vector which represents the parameters of a multivariate normal distribution (or Gaussian) of dimension 3. 3 elements of the output vector represent the mean of the distribution, the other three elements represent the diagonals of a covariance matrix $\Sigma$ (Sigma), where all other elements of the matrix are zero. In other words, each acoustic feature vector is represented as a Gaussian distribution with a mean $\mu$ and log variance $2\log(\sigma)$, the values of which are output by the AFP 21. The standard deviation parameters may also be represented as the standard deviation $\sigma$, variance $\sigma^2$, or the $\log(\sigma)$ of the distribution for example.

Drawing the acoustic feature vectors from a probability distribution may provide increased robustness, and also provide improved naturalness in the output speech.

The encoder 10 and decoder 30 may be trained in the same manner as described previously in relation to Figure 3(a).

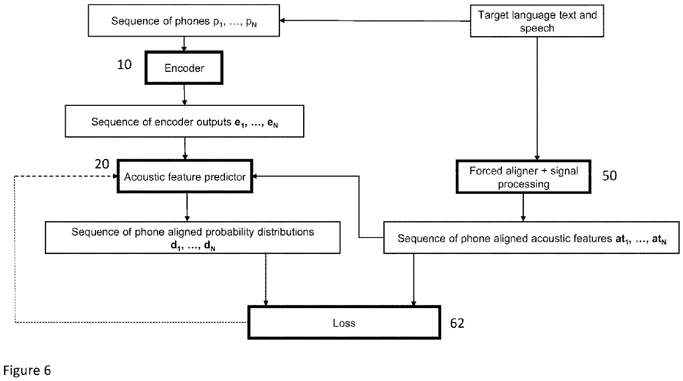

The acoustic feature predictor 21 is trained in a second training stage, as will be described in relation to Figure 6. The same training corpus described in relation to Figure 3(b) above may be used. A sequence of ground truth phone aligned acoustic features is extracted from the training corpus using a forced aligner and signal processing module 50 as has been described previously. A sequence of encoder outputs is also generated in the same manner as has been described previously.

The sequence of encoder outputs is taken as input to the acoustic feature predictor model 21, which generates a sequence of phone aligned acoustic feature probability distribution parameters $\mathbf{ad_1,}$ ..., $\mathbf{ad_N,}$ as described in relation to Figure 5(a) above . Teacher forcing is used, where each vector $\mathbf{E_i}$ input to the second LSTM block 205 is concatenated with the previous nl ground truth acoustic feature vectors $\mathbf{at_{i-1}}$ to $\mathbf{at_{i-nl}}$ before being input to the second LSTM block 205 in the AFP model 21.

Again, the acoustic feature predictor 21 comprises a number of trainable parameters, which can be expressed as a vector $\theta_{\mathbf{AFP}}$. The parameters include the weights for all of the neural network layers in the AFP 21. The parameters are determined by assigning random values as $\theta_{\mathbf{AFP}}$ initially and then updating $\theta_{\mathbf{AFP}}$ sequentially by computing the gradient of a loss function $\dfrac{\partial L_{AFP}}{\partial \theta_{AFP}}$ and updating $\theta_{\mathbf{AFP}}$ using the computed gradient and an optimiser function. The loss function used is the negative log likelihood of obtaining the ground truth acoustic features from the probability distribution corresponding to the parameters output from the AFP 21. This corresponds to a loss function given by:

$$L_{AFP} = \frac{1}{I} \sum_{p=1}^{P} \sum_{i_p=1}^{N_p} \sum_{d=1}^{3} -log\left( \left( \frac{1}{\sigma_{p,i_p}^{(d)} \sqrt{2\pi}} \right) e^{-\frac{1}{2}\left( \frac{at_{p,i_p}^{(d)} - \mu_{p,i_p}^{(d)}}{\sigma_{p,i_p}^{(d)}} \right)^2} \right)$$

where

$$I = \sum_{p=1}^{P} N_p$$

where $at_{p,i_p}^{(d)}$ is the dth entry of the ground truth acoustic feature vector for the ith phone of the pth example from the

corpus, where $\mu_{p,i_p}^{(d)}$ is the mean of the dth acoustic feature (e.g. where d=1, the acoustic feature is the fundamental frequency) output by the acoustic feature predictor 21 for the ith phone of the pth example from the corpus, and where

$\sigma_{p,i_p}^{(d)}$ is the standard deviation of the dth acoustic feature generated from the output of the acoustic feature predictor 21 for the ith phone of the pth example from the corpus.

The gradient of the loss L with respect to each of the trainable parameters of the model is determined through back-propagation. The gradients are then used to determine the updated parameters, using an optimiser function. This family of update methods is known as gradient descent (GD), generally defined iteratively as:

$$\theta = \theta - \mu \frac{\partial L}{\partial \theta}$$

where $\mu$ is the learning rate, which defines how quickly the parameters are updated. In this example, $\mu$ = 0.001. An Adam optimization algorithm is used in this example.

In the second stage of training in this example, the encoder parameters are frozen and the AFP parameters are learned for 400 000 iterations.

In the above described example, the acoustic feature predictor 21 generates a 6 dimensional vector $ad_i$ , comprising a predicted mean and log variance value for each of the three acoustic features corresponding to the phone i.

In other examples however, the acoustic feature predictor 21 generates additional parameters defining the probability distribution. For example, a 9 dimensional vector $ad_i$, comprising a predicted mean and log variance for each of the three acoustic features corresponding to the phone i, and predicted correlation values for the three acoustic features may be generated. In this example, each vector $ad_i$ comprises a first value, which corresponds to a mean for $a^{(1)}$, a second value which corresponds to a log variance for $a^{(1)}$, a third value which corresponds to a mean for $a^{(2)}$, a fourth value which corresponds to a log variance for $a^{(2)}$, a fifth value which corresponds to a mean for $a^{(3)}$, a sixth value which corresponds to a log variance for $a^{(3)}$, a seventh value, which corresponds to the correlation of $a^{(1)}$ and $a^{(2)}$, an eighth value, which corresponds to the correlation of $a^{(2)}$ and $a^{(3)}$, and a ninth value, which corresponds to the correlation of $a^{(1)}$ and $a^{(3)}$. A tanh function may be applied to the output of the final fully connected layer 210 in the AFP 21 to ensure the correlations are in the range [-1,1].

To generate the acoustic features, standard deviation values are derived from the log variance values. Covariance values are then calculated from the standard deviation values and correlation values, where the covariance of $a^{(1)}$ and $a^{(2)}$ is calculated as the correlation of $a^{(1)}$ and $a^{(2)}$ multiplied by the standard deviation of $a^{(1)}$ and multiplied by the standard deviation of $a^{(2)}$ , and so on. A covariance matrix is then generated. The acoustic features are then generated by first computing the Cholesky decomposition of the covariance matrix, $\Lambda_i$. A random sample $u_i$ is drawn from a standard normal multivariate distribution. The acoustic feature vector $a_i$ is then generated from:

$$a_i = \mu_i + \Lambda_i u_i$$

During the second training stage, the loss function used is again the negative log likelihood of obtaining the ground truth acoustic features from the probability distribution corresponding to the parameters output from the AFP 21. The loss function used is again the negative log likelihood of obtaining the ground truth acoustic features from the probability distribution corresponding to the parameters output from the AFP 21. In this case however, the likelihood function will be that of a multivariate Gaussian with non-zero covariances.

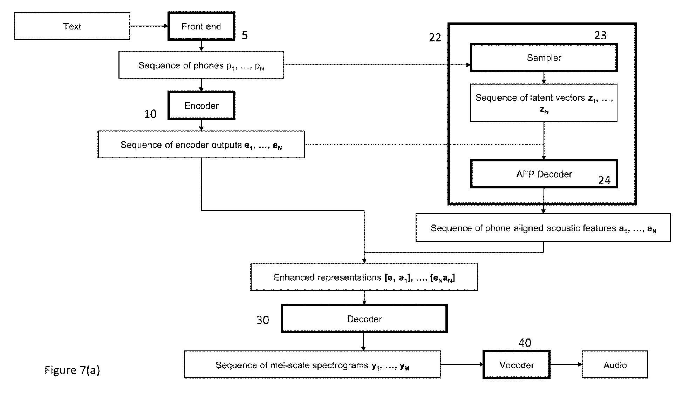

Figure 7(a) is a schematic illustration of a text to speech module 3 which may be used in a system according to an example. In one example, the text to speech module 3 may be used in a speech processing system as described in relation to Figure 1. In another example, the text to speech module 3 may be used in a speech processing system as described in relation to Figure 4(a). The processing performed by the text to speech module 3 during inference, or deployment, will now be described in relation to Figure 7(a).

In the system of Figure 7(a), generating the acoustic data using the AFP model 22 comprises sampling from a probability distribution. The acoustic feature predictor 22 is a learned model. The AFP 22 comprises a decoder 24, which has been trained as part of a variational autoencoder 25.

The text to speech module 3 takes as input a text signal and generates a sequence of phones using a front end model 5 as described in relation to Figure 2(a). The sequence of phones is then taken as input to an encoder 10, which generates a sequence of encoder outputs $e_1$ to $e_N$ as described in relation to Figure 2(a). As has been described previously, additional representations of Speaker ID, Style ID and Language ID may be included in the encoder outputs. The sequence of encoder outputs $e_1$ to $e_N$ is taken as input to the acoustic feature predictor 22 in this example. In some other examples, an intermediate sequence is taken from the encoder 10, combined with any additional representations, and inputted to the AFP 21 as has been described previously.

In this example, the AFP 22 outputs an acoustic feature vector corresponding to each phone in the sequence. The entries correspond to the fundamental frequency, energy and duration as described previously.

The acoustic feature predictor 22 comprises a sampler 23. The sampler 23 may use a set of stored parameters defining a probability distribution for a latent space. In this example, the probability distribution is a multivariate Gaussian distribution. The set of stored parameters comprises a mean $\mu$ and standard deviation $\sigma$ corresponding to each dimension of the latent space. In this example, the latent space is 16 dimensional, and therefore the set of stored parameters comprises 16 stored mean values and 16 stored standard deviation values. The standard deviation parameters may also be represented as the variance $\sigma^2$, or the log-variance of the distribution for example. In this example, the probability distribution is a standard Gaussian distribution, and therefore the mean values are all 0 and the standard deviation values are all 1. Where a standard Gaussian distribution is used, the individual mean (0) and standard deviation values (1) need not be stored in some examples.

N latent vectors are then drawn randomly from the probability distribution. Various methods of drawing a random value from a standard normal distribution are known, for example, a Box-Muller method may be used. The latent variables, corresponding to a vector $z_i$ of length 16 corresponding to each phone i, is generated by sampling from a multivariate standard Gaussian probability distribution.

The latent vectors $z_i$ are then taken as input to the AFP decoder 24. The AFP decoder 24 comprises a neural network. In this example, the AFP decoder 24 comprises a recurrent neural network (RNN), but in other examples, different structures may be used.

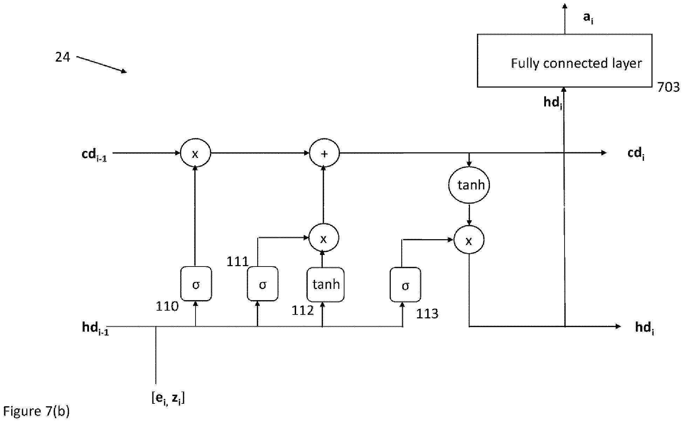

In this example, the sequence of encoder outputs $e_1$ to $e_N$ are also taken as input to the AFP decoder 24. The encoder output $e_i$ is used as a conditioning variable. Each latent vector $z_i$ is concatenated with the corresponding encoder output $e_i$ and the resulting sequence of vectors are taken as input to the AFP decoder 24. In this example, the AFP decoder 24 comprises a RNN. In this example, the AFP decoder 24 comprises a unidirectional LSTM neural network layer, followed by a fully connected layer comprising 3 neurons. A unidirectional LSTM structure has been described in relation to Figure 9(b). Figure 7(b) is a schematic illustration of an example structure for the AFP decoder 24. The latent vector $z_i$ is concatenated with the corresponding encoder output $e_i$ and the resulting vector is taken as input to the LSTM layer. The output of the LSTM layer $hd_i$ for each step i is taken as input to the fully connected layer 703, which outputs the acoustic feature vector $a_i$. The fully connected layer 703 comprises 3 neurons. In alternative examples, a gated recurrent unit (GRU) neural network layer is used instead of an LSTM layer.

The output sequence of acoustic feature $a_1$ to $a_n$ are then combined with the sequence of encoder outputs $e_1$ to $e_N$ to form the enhanced representations as described previously. The sequence of enhanced representations is then taken as input to the decoder 30 as described previously.

Generating the acoustic feature vectors by sampling from a probability distribution may provide increased robustness, and also provide improved naturalness in the output speech.

The encoder 10 and decoder 30 may be trained in the same manner as described previously in relation to Figure 3(a).

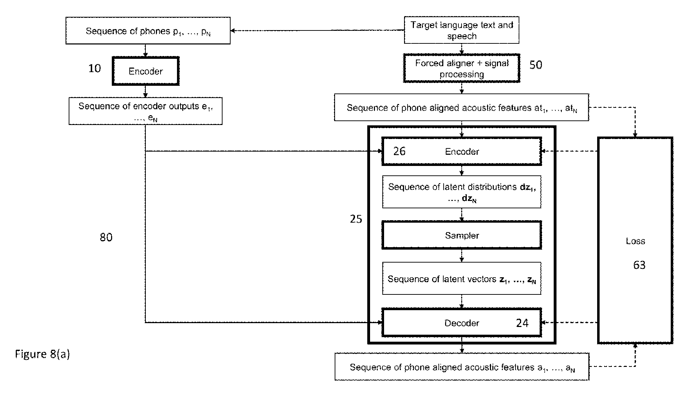

The AFP decoder model 24 of the acoustic feature predictor 22 is trained in a second training stage, as will be described in relation to Figure 8(a). The same training corpus described in relation to Figure 3(b) above may be used. A sequence of ground truth phone aligned acoustic features $at_1$ to $at_N$ is extracted from the training corpus using a forced aligner and signal processing module 50 as has been described previously. A sequence of encoder outputs $e_1$ to $e_N$ is also generated in the same manner as has been described previously.

The AFP decoder 24 model is trained as part of a conditional variational autoencoder (VAE) 25. The VAE 25 comprises the AFP decoder 24, having the same structure as described above. The VAE 25 further comprises an AFP encoder 26.

The AFP encoder 26 represents an approximate posterior distribution $q(z|A, R)$, where $A$ is an input sequence of acoustic feature vectors, $R$ is an input sequence of encoder outputs $e_1$ to $e_N$, and $z$ is a latent vector. The trainable parameters of the AFP encoder 26 can be expressed as a vector $\varphi_{AFP}$. The AFP encoder 26 outputs mean and log variance parameters specifying a probability distribution for the latent vector $z$. The AFP decoder 24 represents a probability distribution $p(A|z, R)$, where the trainable parameters of the AFP decoder 24 can be expressed as a vector $\theta_{AFP}$.

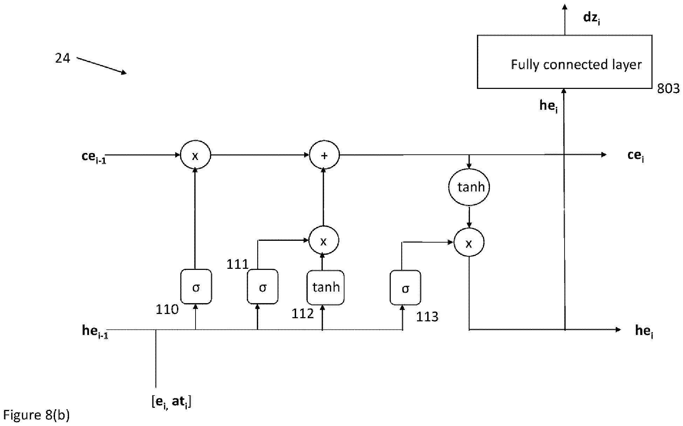

In this example, the AFP encoder 26 comprises an RNN. In this example, the RNN is a unidirectional LSTM neural network layer, followed by a fully connected layer comprising 32 neurons. A unidirectional LSTM structure has been described previously in relation to Figure 9(b). Figure 8(b) is a schematic illustration of an example AFP encoder 26. During the second training stage, each element in the sequence of encoder outputs $\mathbf{e_1}$ to $\mathbf{e_N}$ is concatenated with the respective element in the sequence of ground truth acoustic features $\mathbf{at_1}$ to $\mathbf{at_N}$. The resulting vectors are taken as input one at a time to the LSTM layer in the AFP encoder 26. Each output of the LSTM layer, $\mathbf{he_i}$, is then taken as input to the fully connected layer 803 comprising 32 neurons. The output of the fully connected layer is a 32 dimensional vector for each phone i, corresponding to mean and log variance values defining the probability distribution of the latent space. This vector is referred to as $\mathbf{dz_i}$. The parameters define a multivariate probability distribution for the latent vector.

A latent vector, $\mathbf{z_i}$, is then generated corresponding to each phone, using the parameters stored in $\mathbf{dz_i}$. The latent vectors are generated using the "reparameterization trick", which samples from the multivariate Gaussian distribution defined by $\mathbf{dz_i}$ by the following operation:

$$z_i = \mu_i + \sigma_i \cdot \epsilon_i$$

where $\cdot$ represents a pointwise multiplication, $\mu_i$ is a vector of mean values from $\mathbf{dz_i}$, $\sigma_i$ is a vector of standard deviation values derived from $\mathbf{dz_i}$ and $\epsilon_i$ is a vector of random noise generated from a standard Gaussian distribution.

Each vector $\mathbf{z_i}$ is concatenated with the corresponding encoder output $\mathbf{e_i}$ and the resulting sequence of vectors are taken as input to the AFP decoder 24 as described previously in relation to the inference stage. The AFP decoder 24 outputs a sequence of acoustic feature vectors $\mathbf{a_1}$ to $\mathbf{a_n}$ as described previously.

The parameters $\varphi_{\mathbf{AFP}}$ and $\theta_{\mathbf{AFP}}$ are determined by assigning random values initially and then updating sequentially by computing the gradient of a loss function and updating the parameters using the computed gradient and an optimiser function. In this example, the loss for a single training example is given by:

$$L = -\sum_{i=1}^{N} \mathbb{E}_{q_{\varphi_{AFP}}(\mathbf{Z}_{1:i}|\mathbf{A}_{1:i}, \mathbf{e}_{1:i})} log p_{\theta_{AFP}}(\mathbf{A}_n|\mathbf{z}_{1:i}, \mathbf{e}_{1:i}) + \beta \sum_{i=1}^{N} D_{KL}\left[q_{\varphi_{AFP}}(\mathbf{z}_i|\mathbf{A}_{1:i}, \mathbf{e}_{1:i})||p(\mathbf{z}_i|\mathbf{e}_{1:i})\right]$$

where $\mathbf{e}_i$ is the ith encoder output, $p(\mathbf{z}_i|\mathbf{e}_{1:i})$ is taken as the standard Gaussian distribution, and $\mathbb{E}_{q_{\varphi_{AFP}}(\mathbf{Z}_{1:i}|\mathbf{A}_{1:i}, \mathbf{e}_{1:i})} log p_{\theta_{AFP}}(\mathbf{A}_n|\mathbf{z}_{1:i}, \mathbf{e}_{1:i})$ is the expected value of $log p_{\theta_{AFP}}(\mathbf{A}_n|\mathbf{z}_{1:i}, \mathbf{e}_{1:i})$ over the probability distribution $q_{\varphi_{AFP}}(\mathbf{z}_{1:i}|\mathbf{A}_{1:i}, \mathbf{e}_{1:i})$.

The first term is a reconstruction loss. The first term results in minimising the negative log likelihood of obtaining the ground truth acoustic features given the latent variable and the encoder outputs. This first term is calculated as a mean absolute error loss on the output of the VAE 25 with the ground truth acoustic features:

$$\frac{1}{I}\sum_{p=1}^{P}\sum_{i_p=1}^{N_p}\sum_{d=1}^{3}\left|at_{p,i_p}^{(d)} - a_{p,i_p}^{(d)}\right|$$

where

$$I = \sum_{p=1}^{P} N_p$$

where $at_{p,i_p}^{(d)}$ is the dth entry of the ground truth acoustic feature vector for the ith phone of the pth example from the corpus, and $a_{p,i_p}^{(d)}$ is the dth entry of the acoustic feature vector output from the VAE 25 for the ith phone of the pth example. $N_p$ is the total number of phones in the sequence for example p.

The second term $D_{kL}$ is the Kullback-Leibler divergence between the approximate posterior distribution and its prior (a standard Gaussian in this case).

β may be a constant. In one example, β is 0.01. In other examples, β is set to 0 for an initial number of training iterations, and then gradually increased over a number of iterations. For example, β is set to 0 for 4000 training iterations, and then gradually increased to a maximum of 0.1 over 40000 iterations.

The gradient of the loss L with respect to each of the trainable parameters of the model is determined through back-propagation. The gradients are then used to determine the updated parameters, using an optimiser function. This family of update methods is known as gradient descent (GD), generally defined iteratively as:

$$\theta = \theta - \mu \frac{\partial L}{\partial \theta}$$

where $\mu$ is the learning rate, which defines how quickly the parameters are updated and $\theta$ is a vector formed by concatenating $\varphi_{AFP}$ and $\theta_{AFP}$. An Adam optimization algorithm is used in this example. The VAE 25 is trained for 90,000 iterations, with a learning rate of 0.001. Early stopping may be applied.

In the above described example, a latent vector $z_i$ is generated corresponding to each phone in the sequence. In other examples, a single latent distribution **dz** is generated by the AFP encoder 26, and a single latent vector **z** is sampled from this distribution. The vector **z** is then upsampled to have length N, and each entry i from the upsampled vector concatenated with the corresponding encoder output $e_i$. During inference, a single latent vector is sampled from the standard multivariate Gaussian distribution.

In the above described example, a standard Gaussian prior is used. Alternative priors may be used however.

Although in the above described example, a VAE is trained, and the decoder used to generate phone aligned acoustic features, in other examples, other generative models may be used, for example a generative adversarial network (GAN).

In the above described examples, three acoustic features are used (fundamental frequency, energy, and duration). In other examples, only one or two of these features is used, for example only fundamental frequency is used. In other examples, additional acoustic features may be used. For example, spectral tilt and/or range of fundamental frequency could additionally or alternatively be used.

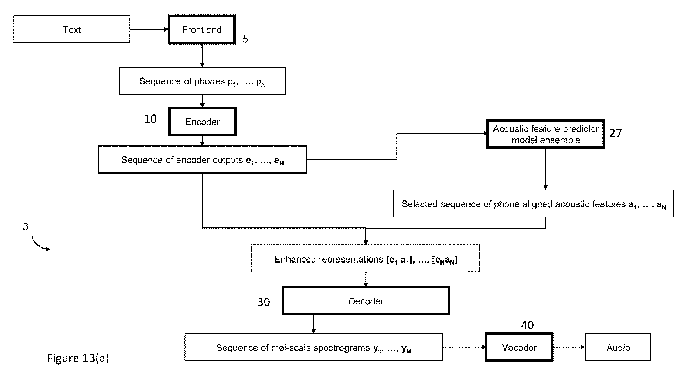

Figure 13(a) is a schematic illustration of a text to speech module 3 which may be used in a system according to an example. In one example, the text to speech module 3 may be used in a speech processing system as described in relation to Figure 1. In another example, the text to speech module 3 may be used in a speech processing system as described in relation to Figure 4(a). The text-to-speech module 3 described in relation to Figure 13(a) generates multiple sequences of acoustic features for an input text signal, and uses an automatic metric to select between them.

In this example, the TTS module 3 comprises a front end 5, an encoder 10, a decoder 30 and vocoder 40 as described with reference to Figure 2(a). The text to speech module 3 differs from the example illustrated in Figure 2(a) in that the AFP 21 is replaced by an AFP model ensemble 27.

The processing performed by the text to speech module 3 during inference will now be described in relation to Figure 13(a). The text to speech module 3 takes as input a text signal and generates a sequence of phones using a front end model 5 as described in relation to Figure 2(a). The text to speech module 3 comprises an acoustic model and an AFP model ensemble 27 comprising two or more AFP models, also referred to as prosody predictors. The acoustic model is a multi-speaker attention-based encoder-decoder model, comprising the encoder 10 and the decoder 30. The sequence of phones output from the front end model 5 is taken as input to the encoder 10, which generates a sequence of encoder outputs $e_1$ to $e_N$ as described in relation to Figure 2(a). The sequence of encoder outputs $e_1$ to $e_N$ is taken as input to the AFP model ensemble 27 in this example. In some other examples, an intermediate sequence is taken from the encoder 10 and inputted to the AFP model ensemble 27.

The AFP model ensemble 27 outputs a predicted sequence of acoustic features, as will be described in more detail below, which in this example are three-dimensional phone-level acoustic features. The predicted acoustic feature values are concatenated to the encoder outputs, attended over and decoded to generate a mel spectrogram. The acoustic model thus takes as input the phone sequence (the text sequence mapped to its corresponding spoken units of sounds), optionally a set of conditioning information (for example a speaker ID, a language ID, and/or a style ID), and an explicit sequence of acoustic features that are established correlates of prosody (in this example, fundamental frequency, energy, and duration) predicted by the AFP model ensemble 27. The AFP model ensemble 27 directs the prosody that the acoustic model then synthesises.

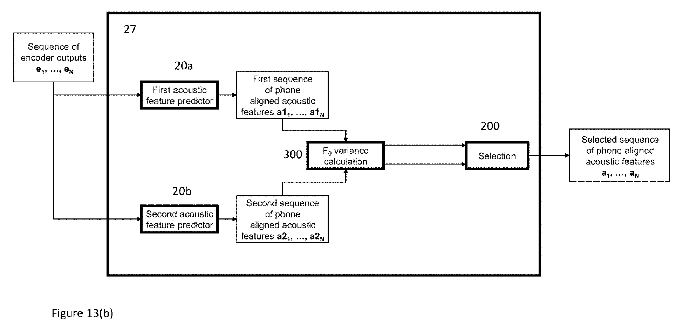

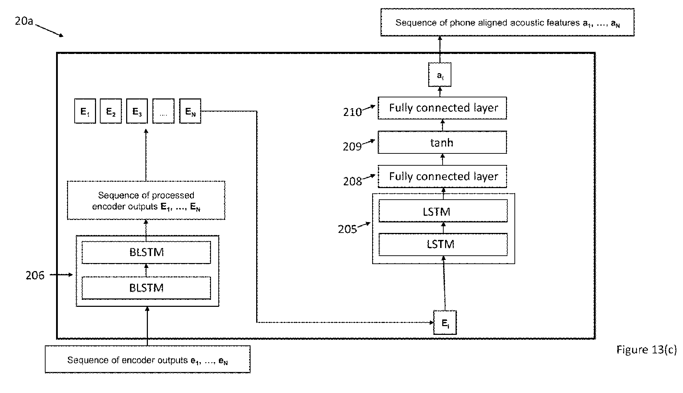

The AFP model ensemble 27 comprises two or more AFP models. An example AFP model ensemble 27 is shown in Figure 13(b). In this example, the AFP model ensemble comprises a first AFP model 20a and a second AFP model 20b. In this example, the first AFP model 20a is similar to the AFP 20 described in relation to Figure 2(c) above, but without the autoregressive feedback. In other words, each input $x_t$ to the first LSTM in the second block 205 corresponds to the vector $E_i$, as shown in Figure 13(c) and described below. The second AFP model 20b comprises a convolutional neural network and will be described in more detail below. In other examples, one of the first or second AFP model may comprise an AFP 21 as described in relation to Figure 5(b). In other examples, one of the first or second AFP model may comprise an AFP 22 as described in relation to Figure 7(a). In other examples, one of the first or second AFP model may comprise a forced aligner, a signal processing module 50 and a re-scaler 35 as described in relation to Figure 4(a) - in this case, a step 404 of assessing the generated audio is not performed, since the acoustic features are selected by the automatic metric. Any combination of two or more of these AFP models may be included in the AFP model ensemble 27.

The acoustic feature predictor models each predict the prosody acoustic features given the input phone sequence, and optionally, a set of conditioning information (for example a speaker ID, a language ID, and/or a style ID). In this example, the sequence of encoder outputs $e_1$ to $e_N$ is taken as input to each acoustic feature predictor model in the ensemble 27. Instead of a single sequence of phone aligned acoustic features, a plurality of such sequences (one for each model in the AFP model ensemble 27) are generated, in other words, acoustic features are predicted with each of the constituent models of the AFP model ensemble 27. In this example, each acoustic feature vector $a_i$ in each sequence comprises a predicted fundamental frequency $F_0$ of the $i^{th}$ phonetic unit.

A criterion is then calculated and used to rank and select the predicted acoustic feature sequence for use by the decoder 30. To perform the selection and ranking, the actual audio does not need to be synthesized with the acoustic model. Rather the acoustic feature predictor model outputs are used, providing computational efficiency and scaling benefits, both in the number of acoustic feature predictor models used and in the number of sentences to synthesise.

In this example, for each sequence of phone aligned acoustic features, the variance of the predicted $F_0$ values is calculated, as in the $F_0$ variance calculation 300 shown in Figure 13(b). The $F_0$ variance is then used as a selection parameter, wherein the sequence of acoustic features with the greatest $F_0$ variance is selected as the output sequence of acoustic features $a_1$, ..., $a_N$ . The selection 200 is also shown in Figure 13(b).

The method uses a $F_0$ variance metric as the selection parameter, implemented in a way that is computationally efficient in systems that model prosody explicitly at the phone-level. $F_0$ variance of voiced phones in the utterance is used as the selection criteria, in order to select from multiple options. During inference, each acoustic feature predictor model in the ensemble 27 outputs a sequence of $F_0$ values, with one value for each phone.

The variance of the $F_0$ values of the phones is calculated for each sequence, while masking out "non-phone" tokens - silences, sentence and word boundary tokens - and all unvoiced phones. As has been described previously, the front end model 5 comprises a text to phone model, that converts the sequence of text into a sequence of phones, including special "non-phone" tokens for silences and the start and end of sentences and words. One or more phones used by the front end model 5 may be designated as unvoiced phones. Any $F_0$ values corresponding to unvoiced phones or special "non-phone" tokens are not included when calculating the variance. For example a list of the phones, including any special tokens, to be masked is stored, and when such a phone is encountered it is masked. For each sequence, the $F_0$ variance is calculated as:

$$\frac{\sum \left( F_{0_{i_v}} - \bar{F_0} \right)^2}{N_v}$$

where $F_{0_{i_v}}$ is the $F_0$ value corresponding to the $i_v$-th voiced phone in the sequence, $\bar{F}_0$ is the mean $F_0$ value for the voiced phones in the sequence, and the sum is performed from 1 to $N_v$ , which is the number of voiced phones in the sequence.

The $F_0$ variance value is computed for the output acoustic features of each AFP model in the ensemble 27. The $F_0$ variance value for each AFP model output is then taken as input to the selection 200. The $F_0$ variance values are compared, and the sequence of phone aligned acoustic features corresponding to the largest $F_0$ variance value is selected as the output of the ensemble 27. The selected output sequence is combined with the sequence of encoder outputs $e_1$ to $e_N$ to provide enhanced representations as described previously in relation to Figure 2(a). The sequence of enhanced representations is then taken as input to the decoder 30 as described previously in relation to Figure 2(a).

Since in this example, only the phone-level $F_0$ values are used to compute the selection metric, the mel-spectrograms do not have to be synthesised for each of the models in the ensemble 27, which could be computationally costly. The lower temporal resolution of phones compared to spectrogram frames also makes the computation of this metric relatively cheap, even as the number of models in the ensemble 27 increases.

The ensemble 27 comprises multiple separately trained acoustic feature predictor models. These acoustic feature predictor models may differ in a number of ways, for example one or more of: model initialisation, model architecture, training data, training routine, training objective etc. The models can generate different acoustic feature contours given a single text sequence. In this example, the two acoustic feature predictor (AFP) models in the ensemble differ only by architecture. Both AFPs take as input the encoder outputs, and output predicted values for three acoustic correlates of prosody - $F_0$, energy and duration - at the phone level.

In this example, the first AFP 20a is a recurrent neural network comprising LSTM blocks, similar to that described in relation to Figure 2(c) above. The first AFP 20a is a non-autoregressive model. Figure 13(c) is a schematic illustration of the first AFP 20a according to this example. In this example, the AFP 20a comprises a first stacked LSTM block 206, comprising two layers of bidirectional LSTMs. The encoder outputs $e_1$ to $e_N$ are taken in sequence as input to the first stacked LSTM block 206, and are mapped to a sequence of 64-dimensional hidden states. The first LSTM block 206 outputs a sequence of N 64-dimensional vectors, $E_1$, ..., $E_N$. The AFP 20a further comprises a second stacked LSTM block 205, comprising two layers of unidirectional LSTMs. The sequence of N vectors , $E_1$, ..., $E_N$ output from the first LSTM block 206 are taken in sequence as input to the second stacked LSTM block 205. The second LSTM block 205 maps the inputs to a sequence of 32-dimensional vectors. Each LSTM in the second block 205 corresponds to a LSTM 104 as described in relation to Figure 9(b) in this example. Each input $x_t$ to the first LSTM corresponds to the vector $E_i$. The ith input to the second LSTM corresponds to the ith output of the first LSTM. The unit size of both LSTMs is 32 in this example. The output sequence of vectors from the second LSTM block 205 is taken as input to a fully connected neural network layer 208. Each vector in the sequence is taken as input to the fully connected layer 208 in turn, where the output of the fully connected layer 208 for each input vector is a 16 dimensional vector. A tanh function is applied to each vector in the sequence, followed by a fully connected layer comprising 3 neurons, which projects each vector down to 3 dimensions. The output of the fully connected layer 201 is the predicted acoustic features corresponding to each phone in the encoder input, $a_1$ to $a_N$.

The second AFP model 20b is a convolutional neural network. This network comprises two stacked blocks. Each block comprises a 1-D convolution layer with kernel size 3 and filter size 256, a ReLU non-linearity, and layer normalisation. The second AFP model 20b thus comprises two convolutional layers in this example. Each layer comprises 256 filters. In this example, the input data comprises the first sequence of representations $e_1$ to $e_N$, which are combined to form a matrix having N columns and a number of rows corresponding to the length of each vector representation $e_i$ - this length will be referred to here as E. The input data thus has a height of E, a depth of 1 and a width of N. In this example, the first layer comprises 256 filters, each having a height of E, a depth of 1 and a width of 3. Each filter therefore corresponds to 3 phones. In this example, since there are 256 filters in the first convolutional layer, the output of the first convolutional layer has a depth of 256. In this example, the stride is 1. In this case, the height of the output of the first convolutional layer is 1 and the width is N. The second convolutional layer comprises 256 filters. Each filter has a depth of 256, a width of 3 and a height of 1. The output of the second convolutional layer has a depth of 256, a width of N and a height of 1. The temporal dimension N, which corresponds to the number of phones, is preserved throughout the network. In this example, a batch normalisation layer is implemented after each convolutional layer, and a ReLU activation layer is also implemented after each batch normalisation layer. Dropout is also applied every layer during training. In this example, the dropout rate is 0.1. The output of this stack is then projected down to 3 dimensions using a fully connected layer comprising 3 neurons to obtain the predicted acoustic features values - $F_0$, energy and duration - for each phone. The output therefore has a depth of 3, a width of N and a height of 1. The second AFP 20b is a non-autoregressive model.

The parameters of the encoder 10 and the decoder 30 are learned during a first training stage, which is performed prior to deployment as described in relation to Figure 3(a). Each AFP model in the AFP model ensemble 27 is then trained separately during a second training stage. The same training corpus as used for the first training stage may be used in the second training stage. In this example, the first AFP model 20a is trained as described in relation to Figure 3(b), where in this example, an L2 loss function is used instead of an L1 loss function. The second AFP 20b is also trained separately during the second training stage. The sequence of ground truth phone aligned acoustic features $at_1$, ..., $at_N$ generated in the first training stage by the forced aligner and signal processing module 50 are used to train the second AFP 20b. For an example p in the corpus, comprising a text signal and a corresponding audio signal from which the ground truth acoustic features have been extracted, the text signal is taken as input to the front end model 5, and the extracted sequence of phones is then taken as input to the encoder module 10, generating the sequence of encoder outputs as described previously. The sequence of encoder outputs is taken as input to the second acoustic feature predictor model 20b, which generates a sequence of phone aligned acoustic features $a2_1$, ..., $a2_N$, where each acoustic feature $a2_i$ is a 3 dimensional vector.

The second acoustic feature predictor model 20b comprises a number of trainable parameters, which can be expressed as a vector $\theta_{AFP2}$. The parameters include the weights for the convolutional layers. The parameters are determined by assigning random values as $\theta_{AFP2}$ initially and then updating $\theta_{AFP2}$ sequentially by computing the gradient of a loss function $\dfrac{\partial L_{AFP2}}{\partial \theta_{AFP2}}$ a

$$L_{AFP} = \frac{1}{I} \sum_{p=1}^{P} \sum_{i_p=1}^{N_p} \sum_{d=1}^{3} \left| at_{p,i_p}^{(d)} - a_{p,i_p}^{(d)} \right|^2$$

where

$$I = \sum_{p=1}^{P} N_p$$

where $at_{p,i_p}^{(d)}$ is the dth entry of the ground truth acoustic feature vector for the ith phone of the pth example from the corpus, and $a_{p,i_p}^{(d)}$ is the dth entry of the acoustic feature vector output from the second acoustic feature predictor 20b for the ith phone of the pth example. $N_p$ is the total number of phones in the sequence for example p.

The gradient of the loss L with respect to each of the trainable parameters of the model is determined through back-propagation. The gradients are then used to determine the updated parameters, using an optimiser function. This family of update methods is known as gradient descent (GD), generally defined iteratively as:

$$\theta = \theta - \mu \frac{\partial L}{\partial \theta}$$

where $\mu$ is the learning rate, which defines how quickly the parameters are updated. An Adam optimization algorithm is used in this example.

In this example, the data set used to train all models is the Mexican-Spanish corpus comprising approximately 38 hours of speech across 32 speakers described previously. First, the acoustic model comprising the encoder 10 and the decoder 30 are trained for 200 000 iterations as described previously. In the second training stage, the encoder 10 and the decoder 30 weights are then frozen and both AFP models trained separately for 400 000 iterations each in a supervised manner, to minimise the L2 loss between the predicted and ground truth acoustic feature values. The ground truth acoustic feature values are extracted from the force-aligned reference speech. An Adam optimization algorithm is used in both training phases in this example. A third training phase is then performed, in which the vocoder 40 is trained. The vocoder is trained taking the outputs from the trained decoder 30 as inputs, and using the ground truth audio signals from the corpus. In this example, a WaveRNN vocoder trained on the generated features of a variant of the acoustic model is used to transform the mel spectrogram to a waveform. The WaveRNN vocoder is trained for 3 million iterations on mel spectrograms generated in teacher forcing mode by the variant of the same acoustic model, using ground truth acoustic feature values. A batch size of 16 is used in all stages of training.

In the above described example, an automatic selection criteria is used to choose from a pool of candidate sequences of acoustic features generated by the models in the AFP model ensemble 27. The criteria is a simple, perceptually motivated metric based on the predicted pitch, or fundamental frequency, which correlates with both preference and perceived intonation variation within an utterance. By virtue of being model-agnostic, this metric can be used to roughly gauge which will be the "most expressive" rendition of an utterance from any number of synthesized variants for a speaker. A key aspect of expressivity is intonation, which refers to the variation in pitch, where pitch is the perceptual quality of frequency, and the fundamental frequency - F0 - is the frequency of sound. Given that the AFP models in the ensemble 27 predict the fundamental frequency at the phone level, a simple metric can be used to capture perceived variation in pitch. In particular, the variance of the fundamental frequency values over all voiced phones in the utterance is used, where all unvoiced phones and non-phone tokens (e.g. sentence and word boundaries, silences) that are present in the phone sequence are excluded. This gives one value per utterance, with the interpretation that the higher the value, the more varied the pitch, which tends to be perceived as more expressive.

Subjective listening tests were conducted, which validate that the fundamental frequency variance does correlate with perceived intonation expressiveness and intonation preference, using a subjective listening A/B test. In particular, the tests show that the larger the difference in the metric on two renditions, the more likely listeners are to prefer the rendition with the larger metric value.

First, test sets on which to conduct the listening tests were prepared. An initial test set of 330 text sentences obtained from translated videos was collated. The sentences were checked by humans for semantic accuracy and pronunciation accuracy of the linguistic frontend, to minimise conflating issues that might increase the noise in the listening test. A large set of sentences was used to provide a representative distribution of metric score differences between the two models in the ensemble 27, and to be representative of the linguistic distribution during inference time.

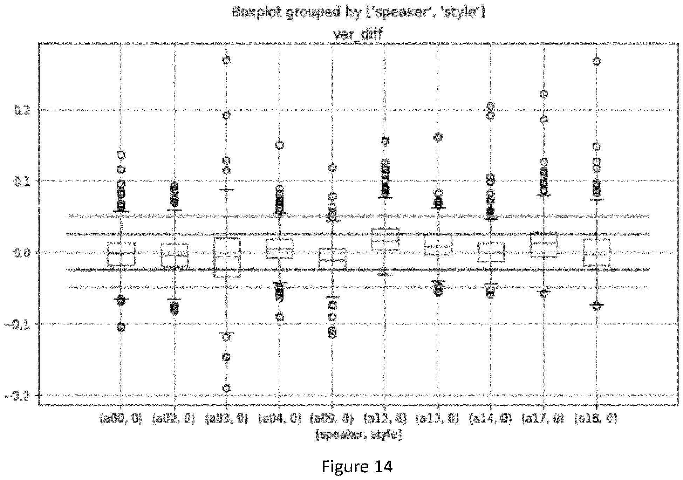

Ten speakers with the most expressive training data in the corpus were then sub-selected. For each of these speakers, the acoustic feature values were predicted for the entire test set of sentences with both the first and second AFPs 20a and 20b. In other words, for each of the ten selected speakers, each sentence from the set of sentences was taken as input text to the TTS model 3 in turn, together with the speaker ID corresponding to the selected speaker. The two fundamental frequency variance values calculated by the calculation step 300 for each sentence and Speaker ID combination were stored. The difference in these two values for each sentence was then computed. Figure 14 is a box plot diagram showing the difference in $F_0$ variance for the ten speakers (a00, a02, a03, a04, a09, a13, a14, a17 and a18). Outliers are also plotted as individual points.

One male speaker (a03) and one female speaker (a18) with the widest metric difference distribution between both AFPs, as measured by the interquartile range, were then sub-selected. The speech data generated by the TTS model 3 for each input sentence for these two Speaker IDs was then used in the test set for the listening tests. Speech data generated for each input sentence for these two Speaker IDs by a TTS model using only the first AFP 20a with the same acoustic model was also generated. This data is used to give the comparison data corresponding to the single model performance for the first AFP 20a. Speech data generated for each input sentence for these two Speaker IDs by a TTS model 3 using only the second AFP 20b with the same acoustic model was also generated. This data is used to give the comparison data corresponding to the single model performance for the second AFP 20b.

Two A/B subjective listening tests were conducted.

The first test (RANDOM) used 30 randomly sampled sentences per speaker (60 in total) to measure the expected performance gain from the $F_0$ variance selection approach.

The second test (BALANCE) sampled sentences balancing for the magnitude of the metric score difference. This composition ensures even coverage of the distribution, in order to determine if larger differences in the metric score correspond to higher preference prediction accuracy, as the distinctions between the model outputs become more perceptually salient. The test set was divided into three groups based on the metric score difference. Utterances with a metric score difference of 0-0.03 (63.4%) were in the LOW group, 0.03-0.06 (24.8%) in the MEDIUM group, and above 0.06 (11.8%) in the HIGH group. The threshold was chosen based on the standard deviation of the score difference distribution (0.04), but lowered slightly to ensure sufficient samples in the HIGH group. Within each group, twenty utterances were randomly sampled to form the BALANCE test set. The direction of the score difference was not controlled.

Each test was evaluated by thirty Mexican-Spanish native speakers, who were asked the translated question "Choose which one you prefer: A or B?", and presented the choices 'A', 'B and 'Undecided'.

The accuracy rates of both listening tests are shown in table 1. A human benchmark (crowd wisdom) was constructed by computing the most frequent label chosen for each utterance. If all raters agreed perfectly, the accuracy of this selection criteria would be 100%. This sets the highest performance achievable by any selection criteria or individual model, and the gap from 100% reflects the degree of disagreement among raters. None of the test utterances had 'Undecided as the most frequent choice. All responses rated 'Undecided (292 in RANDOM; 135 in BALANCE) were excluded to compute the accuracy rates for the individual models and the proposed selection criteria.

$$Accuracy = \frac{Numcorrect}{Numcorrect + Numincorrect} * 100$$

A two-sided Fisher's exact test was conducted between all model / selection criteria pairs, and the Holm-Bonferroni correction (p ≤ 0.05) was applied. In all cases, the accuracy of Crowd wisdom is statistically significantly different from both individual models and the $F_0$ variance selection. The single model performance of first AFP 20a and the second AFP 20b, are not statistically significantly different from each other and from random chance in all cases - the statistically significant results are displayed in bold for hypothesis testing against the $F_0$ variance selection criteria.

Table 1

| Accuracy, % (num. samples) | Random (60) | Balance-Low (20) | Balance-Med (20) | Balance-High (20) |
|---|---|---|---|---|
| Crowd wisdom | **65.28** | **59.35** | **65.65** | **64.43** |
| First AFP 20a single model performance | **50.69** | 50.32 | 51.83 | **50.79** |
| Second AFP 20b single model performance | **49.31** | 49.68 | **48.17** | **49.21** |
| Model performance using $F_0$ variance based selection between first AFP model 20a and second AFP model 20b | 55.18 | 46.88 | 54.07 | 59.68 |

The results in RANDOM show that the $F_0$ variance selection criteria applied to the two models outperforms any of them individually. Taking the single model first AFP 20a accuracy as the baseline performance of an individual model, using $F_0$ variance as a selection criteria closes 31% of the achievable performance gap.

In the BALANCE test, the relative single model performance of the first AFP 20a and second AFP 20b remained stable and similar to random chance across all magnitudes of metric differences. The accuracy of $F_0$ variance selection improved as the metric difference between both models increased from LOW, MEDIUM to HIGH. In the LOW group, the accuracy of the $F_0$ variance selection was statistically insignificantly different from the individual models. In the MEDIUM group, the metric outperforms a TTS model using only the second AFP model 20b, and in the HIGH group, it statistically significantly outperforms both individual models. A larger difference in this metric correlates with a higher accuracy in predicting preference of the output speech.

Taking the first AFP model 20a accuracy as the baseline, the $F_0$ variance selection criteria closes 65% of the achievable performance gap in the HIGH group. These results demonstrate that above a certain threshold, the $F_0$ variance metric is sufficiently sensitive to identify perceptually salient aspects of prosody that correlate with preference.

The performance may increase further with the number of AFP models included in the ensemble 27, both in terms of time saved from reduced manual listening, and increased chances of there being a better utterance compared to a single model system.

Text-to-speech systems have become capable of producing synthetic speech with naturalness levels on par with human speech. A focus has shifted beyond naturalness towards modelling and generating expressive speech. However, one particular model may not outperform other models all of the time. For example, an issue with synthetic speech is a perceived monotony or lack of variation or "flatness" in intonation, which is a symptom of "average prosody". The variance of the fundamental frequency (referred to as $F_0$ variance) of voiced phones in an utterance is a perceptually motivated metric that captures, or provides a proxy, for this phenomenon. TTS models described herein model $F_0$ explicitly, with a prosody predictor - the acoustic feature predictor. The variance of the fundamental frequency can be computed directly from outputs of the acoustic feature predictor without having to generate the audio features, making it a computationally efficient metric. Using this metric as an automatic selection criteria from a model ensemble (i.e. multiple AFP models), the method may outperform the constituent individual models.

Predictions are generated from multiple models and the one with the highest metric score selected. Sampling from a single model can face a tradeoff between variation and realisticness. In the ensemble approach, individual models can differ in data, representation, architecture, initialisation, training routine, objective etc., which can provide further variation in prediction without sacrificing realisticness. Given the multifaceted and probabilistic nature of prosody, different models can end up learning different aspects of the distribution, influenced by inductive bias and randomness, that are difficult to provide in a single model. Given a selection of models, the most expressive rendition is automatically selected. In particular, using the $F_0$ variance to automatically choose an output of an AFP model from a plurality of outputs from an ensemble of models can provide an improved output.

In the above described example, the first AFP model 20a and the second AFP model 20b generate the acoustic features at the phone level, i.e. a set of acoustic feature values (for example, one each for $F_0$, energy and duration) are predicted for every phone in the sequence. In other examples, the acoustic features are modelled at other sub-utterance levels, for example frame-level or other linguistic units such as word-level.

In the above described example, a model ensemble comprising two or more AFP models to generate multiple sets of acoustic data has been described. In alternative examples however, the multiple sets of acoustic data can be generated using a single AFP model, where generating the acoustic data using the AFP model comprises sampling from a probability distribution. For example, the AFP model as described in relation to Figures 5(b) above may be used to generate the sets of acoustic data. In this case, each set of acoustic data is generated by sampling from the probability distributions defined by the vector $\mathbf{ad_i}$. By sampling multiple times, different sets of acoustic data are generated and can be selected between using a selection criteria as described in relation to Figure 13(a). Alternatively, the AFP model as described in relation to Figure 7(a) above may be used to generate the multiple sets of acoustic data. In this case, each set of acoustic data may be generated by inputting the sequence of encoder outputs $\mathbf{e_1}$ to $\mathbf{e_N}$ to the acoustic feature predictor 22. By inputting the sequence multiple times, different sets of acoustic data are generated, since the acoustic feature predictor 22 comprises a sampler 23.

In the above described example, the AFP model ensemble 27 comprises two or more different AFP models, with the selection metric used to select between the acoustic features. However, in other examples, two or more different acoustic models may be used. Each encoder from the different acoustic models feeds into the same AFP model, which then generates different sequences of acoustic features corresponding to each encoder model. The selection metric can then be used to select between the acoustic features and the corresponding acoustic model. Different combinations of acoustic model and AFP model may also be used, with the selection metric used to select between them.

In some examples, the model ensemble 27 may be used to replace the AFP 20 in the example illustrated in Figure 11 for example, or in an alternative TTS model.

In the above described examples, the selection metric is based on fundamental frequency, which captures one aspect of expressivity - intonation. However, other metrics may be calculated from the predicted acoustic features and used as the selection criteria. For example, similar measures for variation in amplitude and rhythm may additionally or alternatively be used in the selection.

Although in the above described example, the variance of the fundamental frequency is used as the selection criteria, in other examples, similar metrics may be used, such as a log variance or a standard deviation for example. In other examples, the selection metric may be generated by taking acoustic data as input to a trained neural network. For example, the fundamental frequency values output from the first AFP 20a may be taken as input to a trained model that outputs a selection criteria value for the acoustic features output from the first AFP 20a, and the fundamental frequency values output from the second AFP 20b may be taken as input to the trained model to output a selection criteria value for the acoustic features output from the second AFP 20b. The neural network may be trained using a training data set comprising sequences of acoustic features with corresponding training labels indicating preference. The training labels may be generated by synthesizing speech corresponding to the acoustic features and performing listening tests with human users for example.

In the above described examples, the selection metric is generated from the acoustic data, for example from the fundamental frequency. In other examples, a selection criteria can be based on another output of a TTS model.

For example, a selection criteria may be determined from speech signals. For example, a neural network trained on speech signals with corresponding training labels indicating preference is used to generate a selection parameter value for each output speech signal. For example, a mean opinion score (MOS) as described in Yichong Leng et. al. "MBNET: MOS PREDICTION FOR SYNTHESIZED SPEECH WITH MEAN-BIAS NETWORK" arXiv:2103.00110v1, may be used to automatically score and select between output speech signals. Alternatively, the $F_0$ variance is determined from the speech signals and used as a selection criteria as described previously. A RAPT algorithm, as described in relation to Figure 3(a) above, can be used to extract the fundamental frequency from the speech frames. Unvoiced frames are excluded. Such selection criteria can be used to select between multiple output speech signals generated by a TTS model generating multiple output speech signals from different sets of acoustic data from an AFP model ensemble, or different sets of acoustic data generated using a single AFP model, where generating the acoustic data using the AFP model comprises sampling from a probability distribution. Alternatively, such selection criteria can be used to select between multiple output speech signals generated by different TTS models, or by different components of the TTS model, for example different vocoders or different acoustic models.

In other examples, a selection criteria may be determined from an output of the acoustic model, for example the selection criteria may be determined from the sequence of spectrogram frames output from the decoder. For example, the selection criteria can be based on the global variance of the Mel-frequency cepstral coefficients (MFCCs) of the mel spectrogram frames output from the acoustic model. For each spectrogram, a global variance vector comprising the variance of each coefficient across the frames is calculated. The sum of the variance of the coefficients is then calculated and used as the selection criteria. The sequence of mel spectrogram frames with the greatest global variance is automatically selected and used as input to the vocoder 40 to generate the output speech. Such selection criteria can be used to select between multiple output spectrograms generated by an acoustic model generating multiple spectrograms from different sets of acoustic data from an AFP model ensemble, or different sets of acoustic data generated using a single AFP model, where generating the acoustic data using the AFP model comprises sampling from a probability distribution. Alternatively, such selection criteria can be used to select between multiple output spectrograms generated by different acoustic models for example.

Two or more different selection criteria may be used together. Different selection criteria may be weighted differently.

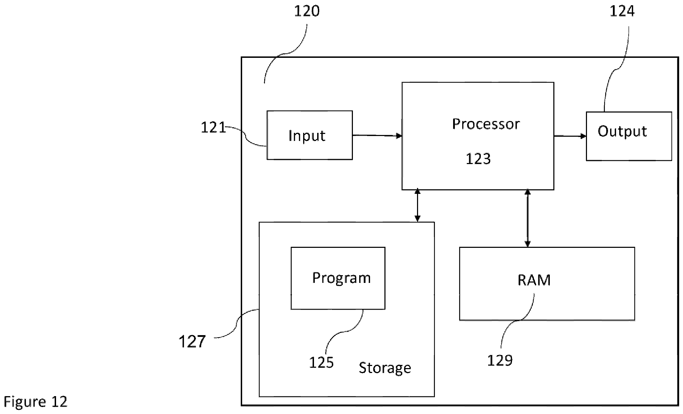

Figure 12 shows a schematic illustration of a system 120 for processing a speech signal in accordance with an example. The system 120 comprises an input 121, a processor 123, a RAM 129, an output 124, and storage 127. The system 120 takes an input speech signal in a source language (also referred to as the second language) and outputs a speech signal in a target language (also referred to as the first language). The input speech signal corresponds to spoken text received by a microphone for example. The input speech signal may be received as an audio file or a video file for example. The input speech may be converted to a Waveform Audio File format (WAV format). The output speech signal may be output as an audio file or a video file for example. For example, the output speech may be output as a WAV file.

The system 120 is a computing system. It may be an end-user system such as a mobile device or personal computer, or a server for example.

The processor 123 is coupled to the storage 127 and accesses the RAM 129. The processor 123 may comprise logic circuitry that responds to and processes the instructions in code stored in working memory, including the RAM 129. Although a single processor 123 is shown in the figure, it is to be understood that the system 120 may comprise two or more processors, which may be located in the same system 120 or be located remotely, and be configured to perform different parts of the processing and transmit data between them. For example, the system 120 may comprise a graphical processing unit (GPU) and a central processing unit (CPU), where various operations are implemented by the GPU, and other operations are implemented by the CPU. For example, matrix operations may generally be performed by the GPU.

In some examples, the automatic speech recognition 1 may be performed on a first system, the text to text translation 2 may be performed on a second system, and the speech synthesis 3 may be performed on a third system. Various parts of the speech synthesis may be performed as separate services. For example, the forced aligner model may be executed on a first device, which comprises a CPU. In one example, the forced aligner model is executed on a device comprising two nodes, each with 8 non-multithreaded AMD EPYC 7V12 (Rome) processor cores, having a base frequency of 2.45 GHz, all-cores peak frequency of 3.1 GHz and single-core peak frequency of 3.3 GHz, with 440 GiB of system memory. The acoustic feature predictor, encoder, decoder, and vocoder may be executed on separate devices, which comprise a GPU. In one example, the models other than the forced aligner, including the AFP, acoustic model and vocoder, run on 1 node comprising 1 NVIDIA T4 GPU with 16 GB of memory, up to 8 non-multithreaded AMD EPYC 7V12 (Rome) processor cores, having base frequency of 2.45 GHz, all-cores peak frequency of 3.1 GHz and single-core peak frequency of 3.3 GHz, and 440 GiB of system memory.

The storage 127 comprises non-volatile or persistent memory. A computer program 125 is stored in storage 127. The storage 127 is accessed by the processor 123 and the stored code 125 is retrieved and executed by the processor 123. In particular, when executed, computer program code 125 embodying the methods described above is represented as a software product stored in the working memory. Execution of the code 125 by the processor 123 will cause methods as described herein to be implemented.

The processor 123 also accesses the input 121 and the output 124. The input and outputs 121, 124 may be a single component or may be divided into a separate input interface 121 and a separate output interface 124 for example.

The input 121 receives the speech signal in the source language. The input 121 may be a receiver for receiving data from an external storage medium or a network. Alternatively, the input 121 may comprise hardware such as a microphone. Alternatively, the input 121 may read data from a stored audio or video file, which may be stored on the system or on a separate storage medium such as a floppy disk, a CD ROM, a magnetic device or a programmable memory device.

The output 124 may comprise hardware, such as a speaker. Alternatively, the output 124 may be a transmitter for transmitting data to an external storage medium or a network. Alternatively, the output 124 may write data in a stored audio or video file, which may be stored on the system or on a separate storage medium such as a floppy disk, a CD ROM, a magnetic device or a programmable memory device.

The storage 127 is communicatively coupled with the processor 123. The storage 127 may contain data that is used by the code 125 when executed by the processor 123. As illustrated, the storage 127 is local memory that is contained in the device. Alternatively however, the storage 127 may be wholly or partly located remotely, for example, using cloud based memory that can be accessed remotely via a communication network (such as the Internet). The code 125 is also stored in the storage 127. The code 125 is placed in working memory when executed.

The system 120 may be located in a common system with hardware for inputting and outputting data, such as a microphone and speaker. Alternatively, the system 120 may be a remote system 120, which receives input data transmitted from a separate system, and transmits output data to another separate system. The system 120 may be a remote system 120, which receives data regarding the input speech signal transmitted from a microphone unit, and transmits data regarding the output speech signal to a speaker unit. The system may be implemented on a cloud computing system, which receives and transmits data.

Usual procedures for the loading of software into memory and the storage of data in the storage unit 127 apply. The code 125 can be embedded in original equipment, or can be provided, as a whole or in part, after manufacture. For instance, the code can be introduced, as a whole, as a computer program product, which may be in the form of a download, or can be introduced via a computer program storage medium, such as an optical disk. Alternatively, modifications to existing dialogue manager software can be made by an update, or plug-in, to provide features of the described examples.

While it will be appreciated that the described examples are applicable to any computing system, the example computing system illustrated in Figure 12 provides means capable of putting examples, as described herein, into effect. In particular, the system may be used to perform speech processing methods. In use, the system 120 receives data corresponding to the input speech signal through data input 121. The program 125, executed on processor 123, outputs data corresponding to the output speech signal through the output 124 in the manner which has been described with reference to the figures. The processor 123 may comprise logic circuitry that responds to and processes the program instructions.

The computing system illustrated in Figure 12 may also provide means capable of putting the text to speech synthesis methods described herein into effect. The computing system illustrated in Figure 12 may also provide means capable of putting the training methods described herein into effect. A training method may be performed on a first system, and the trained models retained on the first system and executed on the first system. Alternatively, the training method may be performed on a first system, and the trained models loaded onto and implemented on a second system.

It will be understood that the invention is not limited to the embodiments above-described and various modifications and improvements can be made without departing from the scope of the invention as defined by the appended claims.

**Claims**

1. A computer implemented speech processing method for generating translated speech comprising:

   receiving a first speech signal corresponding to speech spoken in a second language;
   generating first text data from the first speech signal, the first text data corresponding to text in the second language;
   generating second text data from the first text data, the second text data corresponding to text in a first language;
   responsive to obtaining a second speech signal corresponding to the second text spoken in the first language and in a second voice:

   extracting first acoustic data from the second speech signal;
   modifying the first acoustic data based on one or more acoustic data characteristics corresponding to a first voice; and
   generating an output speech signal using a text to speech synthesis model taking the second text data as input and using the modified first acoustic data, the output speech signal corresponding to the second text spoken in the first language.

2. The method according to claim 1, wherein the text to speech synthesis model has been trained using speech signals spoken in the first language and in the first voice.

3. The method according to claim 1 or 2, wherein the text to speech synthesis model comprises:

   an acoustic model, comprising:

   a first part, configured to generate a first sequence of representations corresponding to phonetic units from the second text data, wherein the modified first acoustic data comprises an acoustic feature vector corresponding to each phonetic unit, and wherein each representation in the first sequence is combined with the corresponding acoustic feature vector to form a sequence of enhanced representations; and
   a second part, configured to generate a sequence of spectrogram frames from the second sequence of enhanced representations; and

   a vocoder, configured to generate the output speech signal from the sequence of spectrogram frames.

4. The method according to any preceding claim, further comprising:

   generating second acoustic data using an acoustic feature predictor model taking data from the second text data as input; and
   generating an output speech signal using the text to speech synthesis model taking the second text data as input and using the second acoustic data, the output speech signal corresponding to the second text spoken in the first language.

5. The method according to claim 4, wherein the acoustic feature predictor model has been trained using speech signals spoken in the first language and in the first voice.

6. The method according to claim 4 or 5, wherein generating the second acoustic data comprises sampling from a probability distribution.

7. The method according to claim 6, wherein the acoustic feature predictor model generates one or more parameters representing a probability distribution for one or more of the features in the acoustic data, and wherein the acoustic data is generated using the probability distribution.

8. The method according to claim 6, wherein the acoustic feature predictor model:

   generates one or more parameters representing a probability distribution;
   samples an intermediate variable from the probability distribution; and
   takes the intermediate variable as input to an acoustic feature predictor decoder, wherein the acoustic feature predictor decoder generates the acoustic data.

9. A system, comprising one or more processors configured to:

    receive a first speech signal corresponding to speech spoken in a second language;
    generate first text data from the first speech signal, the first text data corresponding to text in the second language;
    generate second text data from the first text data, the second text data corresponding to text in a first language;
    responsive to obtaining a second speech signal corresponding to the second text spoken in the first language and in a second voice:

        extract first acoustic data from the second speech signal;
        modify the first acoustic data based on one or more acoustic data characteristics corresponding to a first voice; and
        generate an output speech signal using a text to speech synthesis model taking the second text data as input and using the modified first acoustic data, the output speech signal corresponding to the second text spoken in the first language.

10. A non-transitory computer readable storage medium comprising computer readable code configured to cause a computer to perform the method of any of claims 1 to 8.


**Patentansprüche**

1. Computer-implementiertes Verfahren zum Verarbeiten von Sprache, um eine übersetzte Sprache zu erzeugen, umfassend:

    Empfangen eines ersten Sprachsignals, das einer Sprache entspricht, die in einer zweiten Sprache gesprochen wird;
    Erzeugen von ersten Textdaten aus dem ersten Sprachsignal, wobei die ersten Textdaten einem Text in der zweiten Sprache entsprechen;
    Erzeugen von zweiten Textdaten aus den ersten Textdaten, wobei die zweiten Textdaten, einem Text in der ersten Sprache entsprechen;
    als Reaktion auf ein Erhalten eines zweiten Sprachsignals, das dem zweiten Text entspricht, das in der ersten Sprache und mit einer zweiten Stimme gesprochen wird:

        Extrahieren von ersten akustischen Daten aus dem zweiten Sprachsignal;
        Modifizieren der ersten akustischen Daten basierend auf einer oder mehreren Eigenschaften der akustischen Daten, die einer ersten Stimme entsprechen; und
        Erzeugen eines Ausgangssprachsignals, indem ein Text-zu-Sprache-Synthesemodell verwendet wird, die zweiten Textdaten als Eingabe übernommen werden und die modifizierten ersten akustischen Daten verwendet werden, wobei das Ausgangssprachsignal dem zweiten Text entspricht, der in der ersten Sprache gesprochen wird.

2. Verfahren nach Anspruch 1, wobei das Text-zu-Sprache-Synthesemodell trainiert wurde, indem Sprachsignale verwendet werden, die in der ersten Sprache und mit der ersten Stimme gesprochen wurden.

3. Verfahren nach Anspruch 1 oder 2, wobei das Textzu-Sprache-Synthesemodell umfasst:
ein akustisches Modell, das umfasst:

    einen ersten Teil, der konfiguriert ist zum Erzeugen einer ersten Sequenz von Repräsentationen, die den phonetischen Einheiten aus den zweiten Textdaten entsprechen, wobei die modifizierten ersten akustischen Daten einen akustischen Merkmalsvektor umfassen, der allen phonetischen Einheiten entspricht, und wobei jede Repräsentation in der ersten Sequenz mit dem entsprechenden akustischen Merkmalsvektor kombiniert wird, um eine Sequenz von erweiterten Repräsentationen zu bilden; und
    einen zweiten Teil, der konfiguriert ist zum Erzeugen einer Sequenz von Spektrogrammframes aus der zweiten Sequenz von erweiterten Repräsentationen; und
    einen Vocoder, der konfiguriert ist zum Erzeugen des Ausgangssprachsignals aus der Sequenz von Spektrogrammframes.

4. Verfahren nach einem der vorhergehenden Ansprüche, das ferner umfasst:

Erzeugen von zweiten akustischen Daten, indem ein akustisches Merkmalsprädiktorenmodell verwendet wird, das Daten aus den zweiten Textdaten als Eingabe übernimmt; und

Erzeugen eines Ausgangssprachsignals, indem das Text-zu-Sprache-Synthesemodell verwendet wird, die zweiten Textdaten als Eingabe übernommen werden und die zweiten akustischen Daten verwendet werden, wobei das Ausgangssprachsignal dem zweiten Text entspricht, der in der ersten Sprache gesprochen wird.

5. Verfahren nach Anspruch 4, wobei das Merkmalsprädiktorenmodell trainiert wurde, indem Sprachsignale verwendet werden, die in der ersten Sprache und mit der ersten Stimme gesprochen wurden.

6. Verfahren nach Anspruch 4 oder 5, wobei das Erzeugen der zweiten akustischen Daten ein Entnehmen einer Probe aus einer Wahrscheinlichkeitsverteilung umfasst.

7. Verfahren nach Anspruch 6, wobei das akustische Merkmalsprädiktorenmodell einen oder mehrere Parameter erzeugt, die eine Wahrscheinlichkeitsverteilung für eines oder mehrere der Merkmale in den akustischen Daten repräsentieren, und wobei die akustischen Daten erzeugt werden, indem die Wahrscheinlichkeitsverteilung verwendet wird.

8. Verfahren nach Anspruch 6, wobei das akustische Merkmalsprädiktorenmodell:

einen oder mehrere Parameter erzeugt, die eine Wahrscheinlichkeitsverteilung repräsentieren;
eine Zwischenvariable als eine Probe aus der Wahrscheinlichkeitsverteilung übernimmt; und
die Zwischenvariable als Eingabe in einen akustischen Merkmalsprädiktorendecodierer übernimmt, wobei der akustische Merkmalsprädiktorendecodierer die akustischen Daten erzeugt.

9. System, das einen oder mehrere Prozessoren umfasst, die konfiguriert sind zum:

Empfangen eines ersten Sprachsignals, das einer Sprache entspricht, die in einer zweiten Sprache gesprochen wird; Erzeugen von ersten Textdaten aus dem ersten Sprachsignal, wobei die ersten Textdaten einem Text in der zweiten Sprache entsprechen;
Erzeugen von zweiten Textdaten aus den ersten Textdaten, wobei die zweiten Textdaten, einem Text in der ersten Sprache entsprechen;
als Reaktion auf ein Erhalten eines zweiten Sprachsignals, das dem zweiten Text entspricht, das in der ersten Sprache und mit einer zweiten Stimme gesprochen wird:

Extrahieren von ersten akustischen Daten aus dem zweiten Sprachsignal;
Modifizieren der ersten akustischen Daten basierend auf einer oder mehreren Eigenschaften der akustischen Daten, die einer ersten Stimme entsprechen; und
Erzeugen eines Ausgangssprachsignals, indem ein Text-zu-Sprache-Synthesemodell verwendet wird, die zweiten Textdaten als Eingabe übernommen werden und die modifizierten ersten akustischen Daten verwendet werden, wobei das Ausgangssprachsignal dem zweiten Text entspricht, der in der ersten Sprache gesprochen wird.

10. Nicht-flüchtiges computerlesbares Speichermedium, das einen computerlesbaren Code umfasst, der konfiguriert ist, um einen Computer zu veranlassen, das Verfahren nach einem der Ansprüche 1 bis 8 durchzuführen.

**Revendications**

1. Procédé de traitement de la parole mis en œuvre par ordinateur pour générer de la parole traduite, le procédé comprenant les étapes suivantes :

recevoir un premier signal vocal correspondant à la parole parlée dans une deuxième langue ;
générer des premières données textuelles à partir du premier signal vocal, les premières données textuelles correspondant au texte dans la deuxième langue ;
générer des deuxièmes données textuelles à partir des premières données textuelles, les deuxièmes données textuelles correspondant au texte dans une première langue ;
en réponse à l'obtention d'un deuxième signal vocal correspondant au deuxième texte parlé dans la première langue et avec une deuxième voix :

extraire les premières données acoustiques du deuxième signal vocal ;

modifier les premières données acoustiques sur la base d'une ou de plusieurs caractéristiques de données acoustiques correspondant à une première voix ; et

générer un signal vocal de sortie au moyen d'un modèle de synthèse texte-parole prenant les deuxièmes données textuelles en entrée et utilisant les premières données acoustiques modifiées, le signal vocal de sortie correspondant au deuxième texte parlé dans la première langue.

2. Procédé selon la revendication 1, dans lequel le modèle de synthèse texte-parole a été formé en utilisant des signaux vocaux prononcés dans la première langue et avec la première voix.

3. Procédé selon la revendication 1 ou la revendication 2, dans lequel le modèle de synthèse texte-parole comprend :
un modèle acoustique, comprenant :

une première partie, configurée pour générer une première séquence de représentations correspondant à des unités phonétiques à partir des deuxièmes données textuelles, où les premières données acoustiques modifiées comprennent un vecteur de caractéristiques acoustiques correspondant à chaque unité phonétique, et où chaque représentation dans la première séquence est combinée avec le vecteur de caractéristiques acoustiques correspondant pour former une séquence de représentations améliorées ; et

une deuxième partie, configurée pour générer une séquence de trames spectrographiques à partir de la deuxième séquence de représentations améliorées ; et

un vocodeur, configuré pour générer le signal vocal de sortie à partir de la séquence de trames spectrographiques.

4. Procédé selon l'une quelconque des revendications précédentes, comprenant en outre les étapes suivantes :

générer des deuxièmes données acoustiques au moyen d'un modèle prédicteur de caractéristiques acoustiques prenant en entrée des données provenant des deuxièmes données textuelles ; et

générer un signal vocal de sortie au moyen du modèle de synthèse texte-parole prenant les deuxièmes données textuelles en entrée et utilisant les deuxièmes données acoustiques, le signal vocal de sortie correspondant au deuxième texte parlé dans la première langue.

5. Procédé selon la revendication 4, dans lequel le modèle prédicteur de caractéristiques acoustiques a été formé en utilisant des signaux vocaux prononcés dans la première langue et avec la première voix.

6. Procédé selon la revendication 4 ou la revendication 5, dans lequel la génération des deuxièmes données acoustiques comprend un échantillonnage à partir d'une distribution de probabilité.

7. Procédé selon la revendication 6, dans lequel le modèle prédicteur de caractéristiques acoustiques génère un ou plusieurs paramètres représentant une distribution de probabilité pour une ou plusieurs des caractéristiques dans les données acoustiques, et où les données acoustiques sont générées en utilisant la distribution de probabilité.

8. Procédé selon la revendication 6, dans lequel le modèle prédicteur de caractéristiques acoustiques :

génère un ou plusieurs paramètres représentant une distribution de probabilité ;

échantillonne une variable intermédiaire à partir de la distribution de probabilité ; et

prend la variable intermédiaire comme entrée dans un décodeur prédicteur de caractéristiques acoustiques, le décodeur prédicteur de caractéristiques acoustiques générant les données acoustiques.

9. Système comprenant un ou plusieurs processeurs configurés pour :

recevoir un premier signal vocal correspondant à la parole parlée dans une deuxième langue ;

générer des premières données textuelles à partir du premier signal vocal, les premières données textuelles correspondant au texte dans la deuxième langue ;

générer des deuxièmes données textuelles à partir des premières données textuelles, les deuxièmes données textuelles correspondant au texte dans une première langue ;

en réponse à l'obtention d'un deuxième signal vocal correspondant au deuxième texte parlé dans la première langue et avec une deuxième voix :

extraire les premières données acoustiques du deuxième signal vocal ;

modifier les premières données acoustiques sur la base d'une ou de plusieurs caractéristiques de données acoustiques correspondant à une première voix ; et

générer un signal vocal de sortie au moyen d'un modèle de synthèse texte-parole prenant les deuxièmes données textuelles en entrée et utilisant les premières données acoustiques modifiées, le signal vocal de sortie correspondant au deuxième texte parlé dans la première langue.

10. Support de stockage non transitoire lisible par ordinateur comprenant un code lisible par ordinateur configuré pour amener un ordinateur à exécuter le procédé selon l'une quelconque des revendications 1 à 8.

1

2

3

| Source language speech | → | Speech recognition | → | Source language text | → | Text-to-text translation | → | Target language text | → | Speech Synthesis | → |

Figure 1

Figure 2(a)

10

Sequence of encoder outputs $e_1, ..., e_N$

| | |
|---|---|
| 200 | RNN |
| 201 | CNN |
| 202 | Embeddings |

Sequence of phones $p_1, ..., p_N$

Figure 2(b)

20

Sequence of phone aligned acoustic features $a_1$, ..., $a_N$

| $E_1$ | $E_2$ | $E_3$ | .... | $E_N$ |

$a_i$

210 → Fully connected layer

Sequence of processed encoder outputs $E_1$, ..., $E_N$

209 → tanh

208 → Fully connected layer

BLSTM

205 → LSTM

206 →

BLSTM

LSTM

| $a_{i-1}$ | ... | $a_{i-nl}$ | $E_i$ |

$E_i$

Sequence of encoder outputs $e_1$, ..., $e_N$

Figure 2(c)

Sequence of mel-scale spectrogram frames $\mathbf{y}_1, ..., \mathbf{y}_M$

30

226 → | CNN |

First neural network | Fully connected layer |

222

224

221 | RNN block |

Stop | 226

Fully connected layer

223

| Attention | ← 220

Figure 2(d)

Sequence of enhanced representations $[\mathbf{e}_1\,\mathbf{a}_1], ..., [\mathbf{e}_N\mathbf{a}_N]$

Figure 3(a)

Figure 3(b)

Figure 4(a)

| Text | → | **Front end** | → | Sequence of phones $p_1, ..., p_N$ | → | **Forced aligner + signal processing** | ← | Audio Voice A |

5

50

Encoder

10

20

Acoustic feature predictor

Acoustic features voice A

Re-scaling     35

Sequence of encoder outputs $e_1, ..., e_N$

Sequence of phone aligned acoustic features $a_1, ..., a_N$

3

Enhanced representations $[e_1 \, a_1], ..., [e_N a_N]$

30     **Decoder** → Sequence of mel-scale spectrogram frames $y_1, ..., y_M$

40     Vocoder

Audio

Figure 4(b)

401     402     403     404

Source language speech Voice C → Speech recognition → Source language text → Text-to-text translation → Target language text → Speech Synthesis using predicted acoustic features → Voice A → Output audio is acceptable? → Y

N

405     406     407

Target language speech Voice B → Forced aligner + signal processing → Acoustic features Voice B → Re-scaler → Acoustic features Voice A → Speech Synthesis using extracted acoustic features → Voice A

Figure 4(c)

| Text | → | Front end | 5 |

Sequence of phones $p_1, ..., p_N$

10 | Encoder

Sequence of encoder outputs $e_1, ..., e_N$ → Acoustic feature predictor | 21

Sequence of phone aligned acoustic features $a_1, ..., a_N$

3

Enhanced representations $[e_1\ a_1], ..., [e_N a_N]$

30 | Decoder

Sequence of mel-scale spectrograms $y_1, ..., y_M$ → 40 | Vocoder → Audio

Figure 5(a)

21

Sequence of phone aligned acoustic features $a_1$, ..., $a_N$

$a_i$

$ad_i$

| $E_1$ | $E_2$ | $E_3$ | .... | $E_N$ |

210 → Fully connected layer

209 → tanh

208 → Fully connected layer

Sequence of processed
encoder outputs $E_1$, ..., $E_N$

205 →

LSTM

LSTM

206 →

BLSTM

BLSTM

| $a_{i-1}$ | ... | $a_{i-nl}$ | $E_i$ |

$E_i$

Sequence of encoder outputs $e_1$, ..., $e_N$

Figure 5(b)

Sequence of phones $p_1, ..., p_N$ ← Target language text and speech

10 → Encoder

Sequence of encoder outputs $e_1, ..., e_N$

20 → Acoustic feature predictor

Forced aligner + signal processing — 50

Sequence of phone aligned probability distributions $d_1, ..., d_N$

Sequence of phone aligned acoustic features $at_1, ..., at_N$

Loss — 62

Figure 6

Figure 7(a)

24

$a_i$

Fully connected layer

703

$hd_i$

$cd_{i-1}$    x    +    $cd_i$

tanh

x

x

111

σ    σ    tanh    σ

110    112    113

$hd_{i-1}$    $hd_i$

$[e_i, z_i]$

Figure 7(b)

Figure 8(a)

Figure 8(b)

Figure 9(a)

Figure 9(b)

Figure 9(c)

Second
Example

First
Example

Figure 10

Figure 11

Figure 12

Text → Front end  5

Sequence of phones $p_1$, ..., $p_N$

10   Encoder                                      Acoustic feature predictor model ensemble  27

Sequence of encoder outputs $\mathbf{e}_1$, ..., $\mathbf{e}_N$

Selected sequence of phone aligned acoustic features $\mathbf{a}_1$, ..., $\mathbf{a}_N$

3

Enhanced representations $[\mathbf{e}_1\,\mathbf{a}_1]$, ..., $[\mathbf{e}_N\mathbf{a}_N]$

30   Decoder

40

Sequence of mel-scale spectrograms $\mathbf{y}_1$, ..., $\mathbf{y}_M$ → Vocoder → Audio

Figure 13(a)

Figure 13(b)

20a

Sequence of phone aligned acoustic features $a_1, ..., a_N$

$a_i$

| $E_1$ | $E_2$ | $E_3$ | .... | $E_N$ |

210 → Fully connected layer

209 → tanh

208 → Fully connected layer

Sequence of processed encoder outputs $E_1, ..., E_N$

205 →
| LSTM |
| LSTM |

BLSTM

206 →

BLSTM

$E_i$

Sequence of encoder outputs $e_1, ..., e_N$

Figure 13(c)

Figure 14

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• US 2020082806 A1

**Non-patent literature cited in the description**

• **SOKOLOV et al.** Neural machine translation for multilingual grapheme-to-phoneme conversion. *arXiv*
• **CHOROWSKI et al.** Attention-Based Models for Speech Recognition. *Proc. NIPS*, 2015, 577-585
• **A. VAN DEN OORD**. WaveNet: A generative model for raw audio. *CoRR*, 2016
• **D. TALKIN**. A robust algorithm for pitch tracking (RAPT). *Speech Coding and Synthesis*, 1995
• **REN et al.** FastSpeech: Fast, Robust and Controllable Text to Speech. *arXiv*
• **YICHONG LENG**. MBNET: MOS PREDICTION FOR SYNTHESIZED SPEECH WITH MEAN-BIAS NETWORK. *arXiv*